# EUROPÄISCHE PATENTSCHRIFT

(11) **EP 3 468 435 B1**
(45) Veröffentlichungstag und Bekanntmachung des Hinweises auf die Patenterteilung: **26.07.2023**
(21) Anmeldenummer: 17732800.2
(22) Anmeldetag: 08.06.2017
(51) Int. Cl.: A47J 43/07, A47J 43/046, A47J 27/00

(54) **VERFAHREN ZUM BETREIBEN EINER KÜCHENMASCHINE**
METHOD FOR OPERATING A FOOD PROCESSOR
PROCÉDÉ POUR FAIRE FONCTIONNER UN ROBOT MÉNAGER

(30) Priorität: 10.06.2016 DE 102016110710
(43) Veröffentlichungstag der Anmeldung: 17.04.2019
(73) Patentinhaber: Vorwerk & Co. Interholding GmbH, 42270 Wuppertal (DE)
(72) Erfinder: KÖNNINGS, Maximilian, 8706 Meilen (CH); RESENDE, Maria, 1500-431 Lissabon (PT); YAN, Wenjie, 40476 Düsseldorf (DE)
(74) Vertreter: Bals & Vogel Patentanwälte PartGmbB
(86) Internationale Anmeldenummer: PCT/EP2017/063990
(87) Internationale Veröffentlichungsnummer: WO 2017/211969

(56) Entgegenhaltungen:
- WO-A1-2014/016117
- WO-A1-2016/016337
- WO-A1-2016/142405

## Beschreibung

Die vorliegende Erfindung betrifft ein Verfahren gemäß der im Oberbegriff des Anspruchs 1 näher definierten Art. Ferner bezieht sich die Erfindung auf eine Küchenmaschine gemäß dem Oberbegriff des Anspruchs 10 sowie auf ein Computerprogrammprodukt gemäß dem Oberbegriff des Anspruchs 15.

Aus dem Stand der Technik sind Küchenmaschinen bekannt, welche zumindest teilweise automatisch Lebensmittel zubereiten können. Eine derartige Küchenmaschine ist bspw. in der Schrift DE 10 2013 106 691 A1. Weiterhin ist aus der WO 2014/016117 A1 und aus der nicht vorveröffentlichten WO2016/142405 A1 eine Küchenmaschine und ein Verfahren zum Betreiben einer Küchenmaschine bekannt, wobei ein aktueller Zustandsparameter des Zubereitungsgutes und/oder ein aktueller Betriebsparameter der Küchenmaschine ermittelt wird. Die Küchenmaschine übermittelt eine Information über das aktuell zur Zubereitung verwendete Rezept sowie den ermittelten Zustandsparameter und/oder Betriebsparameter an einen zentralen Datenspeicher eines Datenkommunikationsnetzwerkes, wobei der Zustandsparameter und/oder der Betriebsparameter mit Referenzparametern für dieses Rezept verglichen wird. Bei einer Abweichung des Zustandsparameters und/oder Betriebsparameters von den Referenzparametern wird ein Korrekturvorschlag von dem zentralen Datenspeicher und/oder von Mitgliedern des Datenkommunikationsnetzwerkes übermittelt.

Eine derartige Küchenmaschine umfasst eine oder mehrere Bearbeitungsvorrichtungen, welche bspw. ein Rührwerk aufweisen. Die Bearbeitungsvorrichtung kann dabei derart angesteuert werden, dass eine selbstständige und/oder zumindest teilweise automatische Zubereitung möglich ist. Dies umfasst insbesondere auch die Abarbeitung von Rezeptschritten durch die Küchenmaschine.

Die zumindest teilweise automatische Zubereitung erfolgt dabei insbesondere gemäß einer Programmierung der Küchenmaschine. Die Programmierung umfasst bspw. Vorgaben, wie Ansteuerungsparameter, welche in Abhängigkeit von Rezeptschritten und/oder der Bedienereinstellung festgelegt werden. Ferner ist es denkbar, dass die Vorgaben in Abhängigkeit von dem zuzubereitenden Lebensmittel angepasst werden. So erfordert bspw. die Zubereitung von Reis eine andere Rührwerksdrehzahl und zeitliche Rührdauer als die Zubereitung von Sahne. Die Art des Lebensmittels wird bspw. durch das Rezept oder durch den Bediener der Küchenmaschine vorgegeben und an der Küchenmaschine entsprechend eingestellt. In Abhängigkeit von der Art des Lebensmittels erfolgt dann die Zubereitung entsprechend einer vorgegebenen Rührdauer und/oder Rührwerksdrehzahl, welche für die Zubereitung des jeweiligen Lebensmittels optimal ist.

Allerdings ist hierbei oft ein Problem, dass die optimale Zubereitung und damit die optimalen Werte für die Ansteuerungsparameter, wie die Rührwerksdrehzahl und/oder die Rührdauer, von sehr vielen Faktoren abhängig sind und von diesen beeinflusst werden. Solche Faktoren sind bspw. die Lebensmitteleigenschaften (Menge, Fettprozent, Hersteller und dergleichen) und/oder die Umgebungsbedingungen (wie die Raumtemperatur). Um die optimalen Werte für die Ansteuerungsparameter zu bestimmen, reicht es daher oft nicht aus, in Abhängigkeit von einer eingestellten Lebensmittelart, d. h. lebensmittelabhängig, vorgespeicherte Werte für die Ansteuerungsparameter heranzuziehen. Insbesondere ist es dann oft nicht möglich, bei unterschiedlichen Voraussetzungen und Umgebungsbedingungen gute und vergleichbare Ergebnisse bei der Zubereitung zu erhalten. Die Berücksichtigung von nur vereinzelten Faktoren ist dabei oft nicht ausreichend, wobei zudem der Kosten- und der technische Aufwand für die Sensorik hoch sind.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte und/oder vereinfachte, zumindest teilweise automatische Zubereitung von Lebensmitteln zu ermöglichen. Weiter soll insbesondere eine Zubereitung durch die Küchenmaschine für ein für die Zubereitung vorgesehenes Lebensmittel, d. h. insbesondere die Ermittlung und/oder Festlegung der optimalen Ansteuerungsparameter für das jeweilige Lebensmittel, in Bezug auf den Zustand und/oder die Art des Lebensmittels verbessert werden. Insbesondere soll dabei der konstruktive Aufwand und/oder Kostenaufwand reduziert werden.

Die voranstehende Aufgabe wird gelöst durch ein Verfahren mit den Merkmalen des Anspruchs 1, durch eine Küchenmaschine mit den Merkmalen des Anspruchs 10 sowie durch ein Computerprogrammprodukt mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Küchenmaschine sowie dem erfindungsgemäßen Computerprogrammprodukt, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren zum Betreiben einer Küchenmaschine, wobei in einem Zubereitungsbetrieb mindestens eine Bearbeitungsvorrichtung der Küchenmaschine zur zumindest teilweise automatischen Zubereitung von mindestens einem und/oder verschiedener Lebensmittel angesteuert wird. Diese Ansteuerung erfolgt bspw. durch eine Steuerungsvorrichtung und/oder durch ein Steuerungssignal, welches von der Steuerungsvorrichtung und/oder von einer Verarbeitungsvorrichtung ausgegeben wird. Insbesondere beeinflusst das Steuerungssignal Ansteuerungsparameter der Zubereitung, sodass bevorzugt durch die Steuerungsvorrichtung die Ansteuerungsparameter, wie die Rührwerksdrehzahl und/oder Rührdauer, bestimmt werden können. Vorzugsweise ist eine Überwachungsvorrichtung vorgesehen, welche eine Ermittlung von Erfassungswerten durch eine Erfassung von mindestens zwei für einen Zustand der Zubereitung spezifischen Erfassungsgrößen an der Küchenmaschine durchführt. Bevorzugt weist die Küchenmaschine die Überwachungsvorrichtung auf, welche insbesondere zumindest während des Zubereitungsbetriebs die Ermittlung der Erfassungswerte als jeweils zeitlich aufeinander folgende Erfassungswerte (durch eine Erfassung) durchführt, wobei besonders bevorzugt die Erfassungswerte für wenigstens einen Zubereitungsparameter der Küchenmaschine und/oder für einen Zustand der Zubereitung des Lebensmittels spezifisch sind.

Hierbei ist insbesondere vorgesehen, dass zumindest einer der nachfolgenden Schritte vorgesehen sind, und/oder die nachfolgenden Schritte (z. B. zeitlich) nacheinander oder in beliebiger Reihenfolge durchgeführt werden:
a) Ermitteln von mindestens einem ersten Erfassungswert, z. B. einem Strommesswert, durch eine erste Erfassung, insbesondere durch einen ersten Sensor, von einer ersten Erfassungsgröße,
b) Ermitteln von mindestens einem zweiten Erfassungswert, z. B. einem Temperaturmesswert, durch eine zweite Erfassung, insbesondere durch einen zweiten Sensor, von einer zweiten Erfassungsgröße, wobei sich insbesondere die zweite Erfassungsgröße von der ersten Erfassungsgröße unterscheidet, vorzugsweise in Bezug auf die Art der Erfassungsgröße (z. B. Stromstärke und Temperatur),
c) Bestimmen von zumindest einer Analyseinformation in Abhängigkeit von dem ersten Erfassungswert und/oder dem zweiten Erfassungswert,
d) Durchführen einer zeitabhängigen Analyse der Analyseinformation zur Bestimmung eines für den Zustand der Zubereitung spezifischen Analyseergebnisses,
e) Ausgeben von mindestens einem Steuerungssignal zur Beeinflussung des Zubereitungsbetriebs, insbesondere der Ansteuerungsparameter, in Abhängigkeit von dem Analyseergebnis, sodass der Zustand der Zubereitung bei der Zubereitung Berücksichtigung findet.

Mit anderen Worten kann anhand der Erfassung der Erfassungsgrößen und dem davon abhängigen Analyseergebnis der Zustand der Zubereitung bei der Zubereitung, d. h. insbesondere zeitlich während der Zubereitung (z. B. während des Rührens und/oder dem Betrieb des Rührwerks im Zubereitungsbetrieb), Berücksichtigung finden. Vorzugsweise können dabei auch mehr als zwei Erfassungsgrößen, insbesondere während eines einzigen Zubereitungsbetriebs, erfasst werden, z. B. mindestens 3 oder mindestens 4 oder mindestens 5 oder mindestens 6 oder mindestens 10 oder mindestens 20 verschiedenartige Erfassungsgrößen. Bevorzugt unterscheiden sich die (sämtlichen) erfassten Erfassungsgrößen, wie die erste und zweite Erfassungsgröße, voneinander in Bezug auf deren Art, sodass bspw. eine erste Erfassungsgröße als Motorsignal (d. h. z. B. Stärke wie Stromstärke des Motorsignals) oder dergleichen und eine zweite Erfassungsgröße als Temperatur oder dergleichen ausgeführt sein kann. Weiter kann es auch vorgesehen sein, dass die erste Erfassungsgröße eine Größe (direkt) am Lebensmittel und/oder direkt beeinflusst durch das Lebensmittel (wie die Motorstromstärke) ist, und insbesondere die zweite Erfassungsgröße eine Größe der Umgebung der Küchenmaschine und/oder des Lebensmittels ist und/oder eine Größe ist, welche durch diese Umgebung beeinflusst wird. Auch kann es möglich sein, dass die Anzahl und/oder Art der erfassten Erfassungsgrößen in Abhängigkeit von dem (eingestellten) zuzubereitenden Lebensmittel festgelegt werden, z. B. durch eine Verarbeitungsvorrichtung der Küchenmaschine und/oder in Abhängigkeit von einer Bedienereingabe und/oder einer Vergleichsvorgabe und/oder einer Erfassungsgrößenauswahl. Somit kann die Zubereitung deutlich verbessert werden.

Bevorzugt wertet die zeitabhängige Analyse mehrere, insbesondere mindestens 2 und/oder mindestens 4 und/oder mindestens 10, der ermittelten Erfassungswerte und/oder der ermittelten ersten Erfassungswerte und/oder der ermittelten zweiten Erfassungswerte (und/oder der jeweils daraus resultierenden Werte, wie jeweils daraus generierte Merkmale) aus, z. B. vergleicht diese miteinander, um bevorzugt (nur) ein einziges Analyseergebnis zu bestimmen. Eine exakte Kenntnis der Faktoren wie der Lebensmitteleigenschaften und Umgebungsbedingungen ist somit nicht nötig, da insbesondere das Analyseergebnis die notwendigen Informationen bereitstellt, um die Zubereitung zu optimieren. Bevorzugt kann in Abhängigkeit von dem Analyseergebnis dann die Zubereitung gesteuert werden, d. h. der Zubereitungsbetrieb und/oder Ansteuerungsparameter derart beeinflusst werden, dass die optimale Zubereitung für das Lebensmittel gewährleistet wird.

Bspw. wird durch die Ausgabe des Steuerungssignals ein Ansteuerungsparameter wie die zeitliche Rührdauer und/oder die Rührwerksdrehzahl beeinflusst und/oder festgelegt. Somit kann in Abhängigkeit von dem für die Zubereitung vorgesehenen (dem zuzubereitenden) Lebensmittel die optimalen Ansteuerungsparameter bestimmt werden und/oder die Zubereitung entsprechend beeinflusst werden. Das Steuerungssignal wird bspw. durch eine Verarbeitungsvorrichtung und/oder durch die Überwachungsvorrichtung und/oder durch eine Steuerungsvorrichtung und/oder durch eine Elektronik der Küchenmaschine ausgegeben.

Weiter ist es bspw. vorgesehen, dass die Bestimmung der Analyseinformation und/oder die Analyse und/oder die Bestimmung des Analyseergebnisses von der Verarbeitungsvorrichtung durchgeführt, bevorzugt durch arithmetische Operationen und/oder eine Signalverarbeitung, wird.

Weiter ist es insbesondere denkbar, dass durch die zeitabhängige Analyse das Analyseergebnis bestimmt wird, welches für den Zustand der Zubereitung spezifisch ist, d. h. insbesondere für den Zustand des Lebensmittels während der Zubereitung. Als Zustand des Lebensmittels während der Zubereitung wird bspw. eine Eigenschaft des Lebensmittels, wie die Konsistenz und/oder Temperatur und/oder optische Eigenschaften und/oder akustische Eigenschaften, verstanden, welche sich während der Zubereitung (d. h. während des Zubereitungsbetriebs) verändern. Die Analyseinformation und/oder die Erfassungswerte und/oder der Zubereitungsparameter ist/sind dabei vorzugsweise von den Erfassungsgrößen an der Küchenmaschine, z. B. Stellgrößen und/oder Einflussgrößen und/oder Eigenschaften der Küchenmaschine und/oder physikalischen Größen, abhängig, welche von dem Zustand des Lebensmittels beeinflusst wird.

Vorzugsweise bezieht sich der Begriff "Erfassungswert" im Rahmen der Erfindung auf einen (bspw. mittels eines Sensors) erfassbaren Wert und/oder Messwert der Erfassungsgröße, d. h. insbesondere einer physikalischen Größe bzw. Messgröße, welche insbesondere an der Küchenmaschine erfasst wird, wobei bevorzugt der Zubereitungsparameter die Erfassungsgröße ist oder beeinflusst. Insbesondere umfasst die Ermittlung der Erfassungswerte eine Messung (Erfassung) der Erfassungsgröße, wobei unter "Messung" in diesem Zusammenhang sowohl eine quantitative aber auch eine qualitative Erfassung verstanden werden kann, und diese somit nicht zwangsläufig die Festlegung einer Einheit und/oder die quantitative Aussage über die Erfassungsgröße umfassen muss. Der Erfassungswert kann bspw. lediglich ein Spannungswert und/oder Stromwert sein, wobei z. B. ein Verlauf ohne konkreten Vergleich mit einer Einheit durch die zeitabhängige Analyse analysiert wird und/oder für die Analyseinformation herangezogen wird. Der Erfassungswert ist dabei bspw. proportional und/oder eindeutig zuordbar zum tatsächlichen Wert der Erfassungsgröße.

Im Rahmen der Erfindung bezeichnet die Erfassungsgröße und/oder der Zubereitungsparameter insbesondere eine erfassbare (messbare) physikalische Größe (wie die Drehzahl des Rührwerks) und/oder Stellgröße (wie das Motorsignal) und/oder Einflussgröße (wie die Temperatur) an der Küchenmaschine, wobei die Erfassungsgröße und/oder der Zubereitungsparameter vorzugsweise (ausschließlich) indirekt von dem Zustand der Zubereitung beeinflusst wird, wie der Motorstrom eines Elektromotors zum Antreiben des Rührwerks. Bspw. bewirkt eine Veränderung der Konsistenz des Lebensmittels einen veränderten (Rühr-) Widerstand auf das Rührwerk und hat damit indirekt Einfluss auf den Motorstrom. Somit ist vorzugsweise der zeitliche Verlauf der Messwerte bzw. Erfassungswerte abhängig von einem Verlauf des Rührwiderstands des Rührwerks. Hierbei hat sich überraschend der Vorteil ergeben, dass eine zeitabhängige Analyse, insbesondere der zeitlich aufeinander folgenden Erfassungswerte, die wesentlichen Informationen für die Optimierung der Zubereitung, insbesondere der Ansteuerung der Bearbeitungsvorrichtung, liefern kann. Insbesondere kann anhand der zeitabhängigen Analyse der Analyseinformation in vorteilhafter Weise ein Fertigstellungszeitpunkt für das Lebensmittel bestimmt werden.

Es ist insbesondere denkbar, dass die Analyse anhand der Analyseinformation derart durchgeführt wird, dass zur Bestimmung des Analyseergebnisses sowohl der erste Erfassungswert als auch der zweite Erfassungswert, und/oder sämtliche Erfassungswerte, und damit vorzugsweise sowohl die erste Erfassungsgröße als auch die zweite Erfassungsgröße und/oder mindestens eine weitere Erfassungsgröße berücksichtigt wird und/oder das Analyseergebnis beeinflussen und damit insbesondere optimieren können.

Bspw. wird eine erste Analyseinformation aus dem ersten Erfassungswert bestimmt und/oder eine zweite Analyseinformation aus dem zweiten Erfassungswert bestimmt, wobei z. B. die erste Analyseinformation mit einer ersten Vergleichsvorgabe und die zweite Analyseinformation mit einer zweiten Vergleichsvorgabe verglichen wird. Bevorzugt wird nur dann ein bestimmtes Ergebnis, wie bspw. ein positives Entscheidungsergebnis, ausgegeben und/oder bestimmt und/oder das Steuerungssignal ausgegeben und/oder bestimmt, wenn beide Vergleiche positiv sind. Mit anderen Worten haben beide Erfassungswerte Einfluss auf das (Gesamt-) Analyseergebnis. Auch kann es möglich sein, dass wenn mehrere Erfassungswerte von mehreren Erfassungsgrößen ermittelt werden, dass sämtliche Erfassungswerte und/oder Erfassungsgrößen Einfluss auf das Analyseergebnis haben, und/oder miteinander durch die Analyse korreliert werden, um so insbesondere die Zubereitung zu verbessern.

Gemäß einem weiteren Vorteil kann es vorgesehen sein, dass der erste und/oder zweite und/oder sämtliche ermittelten Erfassungswerte, insbesondere bei der zeitabhängigen Analyse, zumindest teilweise miteinander verglichen und/oder kombiniert und/oder miteinander korreliert werden. Dies kann bspw. dadurch erfolgen, dass die Erfassungswerte durch arithmetische Operationen miteinander in Beziehung gesetzt werden und/oder das Analyseergebnis von jedem der Erfassungswerte abhängig ist. Dies ermöglicht eine deutliche Verbesserung der Aussagekraft des Analyseergebnisses für die Beeinflussung der Zubereitung.

Des Weiteren kann es im Rahmen der Erfindung vorgesehen sein, dass die erste und/oder zweite Erfassungsgröße jeweils an der Küchenmaschine physikalisch messbare Größen umfassen, welche eine durch die Zubereitung veränderbare Eigenschaft des Lebensmittels jeweils in unterschiedlicher Weise beeinflussen und/oder durch diese Eigenschaft beeinflusst werden, so dass sie insbesondere für einen Zustand der Zubereitung spezifisch sind, wobei vorzugsweise die erste Erfassungsgröße und/oder die zweite Erfassungsgröße und/oder jede (sämtliche) Erfassungsgrößen jeweils diese veränderbare Eigenschaft des Lebensmittels in unterschiedlicher Weise beeinflussen oder durch die Eigenschaft in unterschiedlicher Weise beeinflusst werden. Bevorzugt ist dabei die erste Erfassungsgröße ein Signal, z. B. ein Motorstrom eines Motors eines Antriebs für die Bearbeitungsvorrichtung, und/oder die zweite Erfassungsgröße eine Temperatur des zubereiten Lebensmittels. Bspw. können einige oder sämtliche Erfassungsgrößen direkt oder indirekt von einem Rührwiderstand des Rührwerks der Küchenmaschine abhängig sein. Des Weiteren kann es möglich sein, dass mindestens eine der erfassten Erfassungsgrößen direkt oder indirekt von einem Zustand des zuzubereitenden Lebensmittels, insbesondere während des Zubereitungsbetriebs, abhängig ist. Auf diese Weise können Rückschlüsse auf den Zustand des Lebensmittels anhand bspw. der Erfassungswerte geschlossen werden.

Ferner kann es im Rahmen der Erfindung vorgesehen sein, dass die Erfassungsgrößen jeweils mindestens einen der folgenden Größen, insbesondere Zubereitungsparameter, umfassen, und/oder jeweils mindestens eine der folgenden Größen sind und/oder davon beeinflusst werden:
- eine Drehzahl der Bearbeitungsvorrichtung, vorzugsweise eines Rührwerks der Küchenmaschine,
- ein Parameter eines Antriebs, vorzugsweise eines Motors des Antriebs, z. B. ein Drehmoment,
- ein Motorsignal, bevorzugt ein Motorstrom, welches von einem Drehmoment des Rührwerks der Küchenmaschine abhängig ist,
- eine Temperatur, welche insbesondere an dem zubereiteten Lebensmittel durch einen in der Küchenmaschine integrierten Temperatursensor erfasst wird,
- eine Kerntemperatur des zubereiteten Lebensmittels,
- eine Oberflächentemperatur des zubereiteten Lebensmittels,
- ein Gewicht des zubereiteten Lebensmittels, wobei das Gewicht durch eine in der Küchenmaschine integrierte Waage erfasst wird,
- ein messbarer Parameter am zubereiteten Lebensmittel, welcher insbesondere für einen Fertigstellungszeitpunkt des zubereiteten Lebensmittels spezifisch ist,
- eine Zeitdauer, vorzugsweise Rührdauer des Rührwerks, insbesondere seit dem Zeitpunkt der Aktivierung des Zubereitungsbetriebs,
- eine Helligkeit, welche z. B. durch einen optischen Sensor am zubereiteten Lebensmittel erfasst wird,
- eine Lautstärke, welche insbesondere durch einen akustischen Sensor am zubereiteten Lebensmittel erfasst wird,
- eine Konsistenz des zubereiteten Lebensmittels,
- eine elektrische Eigenschaft des zubereiteten Lebensmittels, vorzugsweise der elektrische Widerstand des Lebensmittels,
- eine Geruchsstoffkonzentration am zubereiteten und/oder des zubereiteten Lebensmittels, bevorzugt innerhalb eines Rührgefäßes der Küchenmaschine,
- eine Geschmacksstoffkonzentration am zubereiteten und/oder des zubereiteten Lebensmittels, bevorzugt innerhalb eines Rührgefäßes der Küchenmaschine,
- zumindest eine chemische Größe des zubereiteten Lebensmittels, insbesondere ein pH-Wert und/oder eine Konzentration des zubereiteten Lebensmittels,
- ein Druck im Bereich des zubereiteten Lebensmittels und/oder ein Druckverlauf, vorzugsweise in einem Rührgefäß der Küchenmaschine,
- zumindest eine spektrale Eigenschaft des zubereiteten Lebensmittels.

Dabei ist es denkbar, dass die Erfassungsgröße vor und/oder bei und/oder nach dem Zubereitungsbetrieb am Lebensmittel erfasst wird. Insbesondere ist es denkbar, dass eine elektronische Datenbank vorgesehen ist, welche bspw. Vergleichswerte für die jeweiligen Erfassungsgrößen umfasst, um insbesondere anhand dieser Vergleichswerte die Erfassungswerte auszuwerten. Auf diese Weise können bspw. anhand von statistischen Verfahren eine Vielzahl von Erfassungsgrößen für die Optimierung der Zubereitung in Beziehung zueinander gesetzt werden.

Des Weiteren kann es im Rahmen der Erfindung vorgesehen sein, dass die Analyseinformation mindestens den ersten und/oder zweiten Erfassungswert und/oder weitere Erfassungswerte umfasst, wobei die weiteren Erfassungswerte durch eine weitere Erfassung einer weiteren Erfassungsgröße und/oder Eigenschaft des Lebensmittels ermittelt werden, wobei z. B. die Eigenschaft des Lebensmittels und/oder die Erfassungsgröße und/oder die Vergleichsvorgabe mindestens eine der folgenden Eigenschaften / Größen / Vorgaben umfasst:
- eine optische Abbildung des Lebensmittels,
- eine akustische Aufnahme der Zubereitung des Lebensmittels im Zubereitungsbetrieb,
- einen Geruch, welcher durch einen Sensor am Lebensmittel erfasst wird,
- einen Geschmack, welcher durch einen Sensor am Lebensmittel erfasst wird.

Selbstverständlich ist es auch denkbar, dass ein einziger Erfassungswert dadurch ermittelt wird und/oder eine einzige Erfassungsgröße dadurch erfasst wird, dass zumindest zwei oder mehr Sensoren (z. B. gleichzeitig) ausgewertet werden. Der Einsatz von einem Verbund von mehreren Sensoren ermöglicht dabei eine deutliche Erhöhung der Qualität der Zubereitung.

Außerdem ist es denkbar, dass im Zubereitungsbetrieb periodisch und/oder wiederholt erste Erfassungswerte ermittelt werden und vorzugsweise parallel dazu, d. h. z. B. innerhalb der gleichen Periode bzw. im gleichen Zyklus und/oder im Wesentlichen gleichzeitig, im Zubereitungsbetrieb periodisch und/oder wiederholt zweite Erfassungswerte und/oder weitere Erfassungswerte ermittelt werden, wobei vorzugsweise die Analyseinformation aus dem zeitlichen Verlauf der jeweiligen periodisch bzw. zyklisch bzw. wiederholt ermittelten Erfassungswerte bestimmt wird, d. h. insbesondere aus einem ersten Verlauf der ersten Erfassungswerte und/oder aus einem zweiten Verlauf der zweiten Erfassungswerte und/oder zumindest einem weiteren Verlauf der weiteren Erfassungswerte. Vorzugsweise wird dabei der zeitliche Verlauf dadurch bestimmt, dass periodisch und/oder wiederholt erste und/oder zweite und/oder weitere Erfassungswerte ermittelt und/oder (zwischen-) gespeichert werden. Besonders bevorzugt kann es vorgesehen sein, dass die Analyse eine zeitabhängige Analyse, insbesondere eine Zeitreihenanalyse, des zeitlichen Verlaufs der jeweiligen Erfassungswerte umfasst. Hierzu werden bevorzugt die Erfassungswerte und/oder die Analyseinformationen und/oder der Verlauf zeitlich gepuffert, wobei vorzugsweise die Zeitanalyse echtzeitfähig durchgeführt wird, um somit zuverlässig und rechtzeitig die Zubereitung beeinflussen zu können.

Vorteilhafterweise kann im Rahmen der Erfindung vorgesehen sein, dass der (erste oder) zweite Erfassungswert außerhalb des Zubereitungsbetriebs, vorzugsweise vor dem Beginn der Zubereitung, ermittelt wird, um insbesondere die darauf folgende Durchführung und/oder eine darauffolgende Auswertung der zeitabhängigen Analyse, insbesondere während des Zubereitungsbetriebs, zur Bestimmung des Analyseergebnisses zu beeinflussen. Bspw. entspricht dabei der Beginn des Zubereitungsbetriebs dem Beginn der Zubereitung. Insbesondere kann dabei die zweite Erfassungsgröße eine Temperatur und/oder ein Gewicht des Lebensmittels und/oder eine Art des Lebensmittels (wie Sahne oder Nudeln) sein, wobei die Art des Lebensmittels bspw. durch einen optischen Sensor erfassbar und/oder schätzbar ist, um somit insbesondere den Zubereitungsbetrieb optimal schon vor dem Beginn einstellen und/oder beeinflussen zu können.

Optional kann es im Rahmen der Erfindung vorgesehen sein, dass zeitlich nachfolgend und/oder gleichzeitig zur zeitabhängigen Analyse noch eine weitere Analyse der Analyseinformation erfolgt, vorzugsweise erst nach einem Auftreten eines bestimmten Ereignisses, insbesondere im Zubereitungsbetrieb und/oder außerhalb des Zubereitungsbetriebs, vorzugsweise nach Beendigung des Zubereitungsbetriebs, um das Analyseergebnis zu bestimmen, wobei sich die weitere Analyse von der zeitabhängigen Analyse unterscheidet. Z. B. kann es sinnvoll sein, ab einem bestimmten (kritischen) Zeitpunkt des Zubereitungsbetriebs eine Analyse durchzuführen, welche schneller als die zeitabhängige Analyse ist, um einer zeitkritischen Veränderung des Lebensmittels bei der Zubereitung gerecht zu werden.

Ein weiterer Vorteil kann im Rahmen der Erfindung insbesondere dadurch erzielt werden, dass der Zustand der Zubereitung als zukünftiger optimaler Fertigstellungszeitpunkt des zubereiteten Lebensmittels bei der Zubereitung ist, wobei das Steuerungssignal zeitlich derart ausgegeben wird, z. B. unter Berücksichtigung einer Latenzzeit, dass eine Deaktivierung des Zubereitungsbetriebs zum Fertigstellungszeitpunkt bewirkt wird, wobei vorzugsweise die Zeitdauer bis zum Erreichen des Fertigstellungszeitpunkts durch eine Berechnung und/oder Vorhersage durch die zeitabhängige Analyse bestimmt wird. Insbesondere dient dabei die Analyse und/oder die Erfassung sämtlicher Erfassungsgrößen z. B. ausschließlich dazu, den optimalen Fertigstellungszeitpunkt bei der Zubereitung zu bestimmen. Alternativ oder zusätzlich kann es auch möglich sein, dass die Erfassung der Erfassungsgrößen und/oder die Analyse auch dazu dient, die Zubereitungsparameter während z. B. des gesamten Zubereitungsbetriebs zu beeinflussen, um die Zubereitung zu optimieren.

Außerdem kann es im Rahmen der Erfindung von Vorteil sein, wenn ein erstes und ein zweites Steuerungssignal ausgegeben wird, wobei das erste Steuerungssignal ausgegeben wird, wenn ein erstes Analyseergebnis bestimmt wird, so dass die Zubereitung in einer ersten Weise beeinflusst wird, vorzugsweise durch Reduzierung einer Drehzahl eines Rührwerks der Küchenmaschine in einem zeitkritischen Bereich des zeitabhängigen Analyse, und/oder das zweite Steuerungssignal ausgegeben wird, wenn ein zweites Analyseergebnis bestimmt wird, so dass die Zubereitung in einer zweiten Weise beeinflusst wird, welche sich von der ersten Weise unterscheidet, insbesondere durch eine Beendigung des Zubereitungsbetriebs. Insbesondere kann es möglich sein, dass das erste und/oder zweite Steuerungssignals nur dann ausgegeben wird, wenn eine bestimmte Art des Lebensmittels zubereitet wird. Hierdurch wird insbesondere der Vorteil erzielt, dass durch die Reduzierung der Drehzahl im zeitkritischen Bereich eine Verlängerung der Zubereitungsdauer erzielt werden kann und damit eine zeitaufwändigere Analyse durchgeführt werden kann. Insbesondere ist dabei das erste Analyseergebnis für das Vorliegen und/oder Eintreten des zeitkritischen Bereichs spezifisch und/oder das zweite Analyseergebnis für das zukünftige Eintreten des optimalen Fertigstellungszeitpunkts spezifisch.

Ferner ist es denkbar, dass die erste und/oder die zweite Erfassungsgröße und/oder die Vergleichsvorgabe ein Umgebungsparameter außerhalb der Küchenmaschine ist, vorzugsweise
- eine räumliche und/oder geographische und/oder örtliche Position der Küchenmaschine, insbesondere in Form einer GPS-Koordinate der Küchenmaschine, um die Zubereitung z. B. an geografische Unterschiede anzupassen,
- eine Information über das Lebensmittel und/oder die Zubereitung des Lebensmittels, welche außerhalb der Küchenmaschine gespeichert ist, vorzugsweise in einer (z. B. elektronischen) Datenbank, um vorzugsweise über ein Netzwerk und/oder cloudbasiert (d. h. z. B. von einem entfernten Rechner über ein Netzwerk und/oder über das Internet) abgerufen wird,
- eine Produktinformation des Lebensmittels, insbesondere über herstellerbezogene Eigenschaften und/oder die Zutaten und/oder über das Mindesthaltbarkeitsdatum, welche bspw. durch das Einscannen eines Strichcodes und/oder einer sonstigen Kennzeichnung ermittelbar ist und/oder manuell durch den Bediener eingegeben wird und/oder von der Datenbank abgerufen werden kann,
- ein Luftdruck außerhalb der Küchenmaschine,
- eine Luftfeuchtigkeit außerhalb der Küchenmaschine,
- eine Temperatur außerhalb der Küchenmaschine (z. B. Umgebungstemperatur),
- eine Uhrzeit und/oder Tageszeit und/oder ein Datum, welche bspw. über die Datenbank und/oder eine weitere Datenbank ermittelbar ist,
wobei vorzugsweise die erste Erfassungsgröße ein Parameter der Zubereitungs-Umgebung (z. B. innerhalb des Rührgefäßes) innerhalb der Küchenmaschine ist.

Des Weiteren kann es optional vorgesehen sein, dass die Analyse bzw. die Bestimmung des Analyseergebnisses, insbesondere durch die zeitabhängige Analyse und/oder durch eine weitere Analyse und/oder durch eine weitere Analyse oder Auswertung, lernfähig (z. B. mittels künstlicher Intelligenz) durchgeführt wird, vorzugsweise derart, dass das Analyseergebnis und/oder ein Qualitätsergebnis der Zubereitung für eine zukünftige Bestimmung des Analyseergebnisses einer zukünftigen Zubereitung gespeichert wird und/oder Verwendung findet, wobei vorzugsweise das Qualitätsergebnis vom Analyseergebnis und/oder von der ersten und/oder zweiten Erfassung und/oder einer weiteren Erfassung von einer weiteren Erfassungsgröße abhängig ist. Dies hat insbesondere den Vorteil, dass die Zubereitung und/oder Analyse mit zunehmender Anzahl durchgeführter Zubereitungen und/oder Analysen zunehmend verbessert werden kann.

Zudem kann es im Rahmen der Erfindung möglich sein, dass die Analyse bzw. die Bestimmung des Analyseergebnisses in Abhängigkeit von einer Parametrisierung erfolgt, wobei vorzugsweise die Parametrisierung vor der Aktivierung des Zubereitungsbetriebs anhand einer benutzerabhängigen Anpassung, insbesondere durch Informationen aus einer Datenbank, erfolgt. Insbesondere kann durch die Parametrisierung eine Anpassung der Analyse dahingehend erfolgen, dass hierdurch die Art der Analyse und/oder Parameter der Analyse, und/oder die zur Analyse herangezogenen Erfassungsgrößen bzw. Erfassungswerte, bestimmbar sind. Insbesondere kann durch die Parametrisierung auch die Auswahl einer Vergleichsvorgabe bestimmt werden. Hierdurch ist die Analyse bspw. vielseitig für unterschiedliche Lebensmittelarten einsetzbar.

Es kann weiter möglich sein, dass bei der zeitabhängigen Analyse mindestens eine Vergleichsvorgabe in Abhängigkeit von einem zubereiteten Lebensmittel ausgewertet wird, wobei, vorzugsweise für die Berechnung und/oder Vorhersage eines zukünftigen bestimmten Zustands, insbesondere Fertigstellungszeitpunkt, ein Vergleich der Analyseinformation mit der Vergleichsvorgabe direkt oder indirekt erfolgt, wobei vorzugsweise mindestens ein zeitlicher Analyseverlauf der Analyseinformation mit mindestens einem zeitlichen Verlaufsmuster der Vergleichsvorgabe verglichen wird. Hierbei ist es auch denkbar, dass die Analyseinformation zunächst zwischenanalysiert wird, z. B. durch eine Filterung und/oder Merkmalsgenerierung, und das Zwischenergebnis der Zwischenanalyse mit der Vergleichsvorgabe verglichen wird, um das Analyseergebnis zu bestimmen. Bevorzugt wird dabei die Vergleichsvorgabe in Abhängigkeit von dem Lebensmittel, d. h. insbesondere der Art des zubereiteten Lebensmittels, z. B. aus einer Datenbank abgerufen. Die Datenbank kann daher z. B. verschiedene Vergleichsvorgaben für unterschiedliche Lebensmittel umfassen, um einen vielseitigen Einsatz der Küchenmaschine zu ermöglichen. Insbesondere wird dabei der zeitliche Analyseverlauf der Analyseinformation in Abhängigkeit von dem zeitlichen Verlauf der jeweiligen Erfassungswerte bestimmt.

Es kann außerdem vorgesehen sein, dass die nachfolgenden Schritte vorgesehen sind, vorzugsweise vor Schritt d) und/oder nach Schritt b)
- Einstellen und/oder Auswählen eines zuzubereitenden Lebensmittels durch eine Bedienereingabe an der Küchenmaschine,
- Auswählen einer Vergleichsvorgabe in Abhängigkeit von dem eingestellten Lebensmittel.

Weiter kann es insbesondere vorgesehen sein, dass als ein weiterer Schritt, vorzugsweise nach Schritt c) und/oder vor Schritt e) und/oder bei Schritt d), vorgesehen ist, dass ein Vergleichen von Werten der Analyseinformation und/oder des Analyseergebnisses mit der Vergleichsvorgabe erfolgt, um insbesondere einen für das Lebensmittel spezifischen zukünftigen Zustand zu bestimmen. Dies ermöglicht einen vielseitigen Einsatz des erfindungsgemäßen Verfahrens für unterschiedliche Lebensmittel.

Weiter ist es denkbar, dass eine Auswahl der Vergleichsvorgabe dadurch erfolgt, dass die Vergleichsvorgabe in Abhängigkeit von einem eingestellten Lebensmittel aus einer Datenbank ausgelesen wird, wobei vorzugsweise die Datenbank lokal und/oder durch einen zur Küchenmaschine entfernten (z. B. räumlich entfernt angeordneten) Rechner cloudbasiert über ein Netzwerk und/oder das Internet und/oder durch eine (insbesondere) mobile Datenspeichereinheit bereitgestellt wird. Unter einer mobilen Datenspeichereinheit wird bspw. auch ein USB-Stick und/oder ein sonstiger tragbarer Datenspeicher verstanden, welcher bspw. in der Küchenmaschine einsetzbar und/oder mit der Küchenmaschine verbindbar ist. Somit können bspw. flexibel neue Vergleichsvorgaben für die Küchenmaschine bereitgestellt werden. Insbesondere kann die Vergleichsvorgabe z. B. in Abhängigkeit von einem zur Zubereitung voreingestellten und/oder vorgesehenen Lebensmittel ausgewählt werden und/oder rezeptabhängig (d. h. bspw. in Abhängigkeit von einem digital gespeicherten Rezept zur automatischen Zubereitung des Lebensmittels) ausgewählt werden. Die Datenbank ist dabei bspw. ein System zur elektronischen Datenverwaltung, vorzugsweise softwarebasiert. Insbesondere kann dabei vorgesehen sein, dass die Auswahl der Vergleichsvorgabe während des Ablaufs eines Rezepts, z. B. an einem bestimmten Punkt des Rezepts, erfolgt.

Ferner ist es denkbar, dass in Abhängigkeit von dem Analyseergebnis ein positives oder negatives Entscheidungsergebnis bestimmt wird, wobei insbesondere das positive Entscheidungsergebnis nur dann bestimmt wird, wenn das Analyseergebnis einen zukünftigen bestimmten Zustand der Zubereitung indiziert, und wobei vorzugsweise das Steuerungssignal nur dann ausgegeben wird, wenn das bestimmte Entscheidungsergebnis positiv ist. Weiter ist es insbesondere denkbar, dass bei der Analyse der gefilterte erste Erfassungswert und/oder der gefilterte zweite Erfassungswert und/oder ein generiertes Merkmal mit einer Vergleichsvorgabe verglichen wird, um z. B. das Analyseergebnis zu bestimmen. Das generierte Merkmal wird bspw. durch eine Auswertung und/oder Merkmalsgenerierung, z. B. anhand der Erfassungswerte und/oder anhand des erfassten Verlaufs, ermittelt. Des Weiteren kann eine Analyse z. B. auch Filtermethoden umfassen, welche z. B. zur Glättung des erfassten Verlaufs der Erfassungswerte zur Anwendung kommen.

Besonders bevorzugt kann es vorgesehen sein, dass in einem Zubereitungsbetrieb die Bearbeitungsvorrichtung, welche vorzugsweise ein Rührwerk umfasst, zur zumindest teilweise automatischen Zubereitung von unterschiedlichen Lebensmitteln, insbesondere Schlagsahne und/oder Nudeln und/oder Reis, angesteuert wird, wobei für jedes dieser Lebensmittel mindestens eine lebensmittelspezifische Vergleichsvorgabe vorgesehen und/oder vorgespeichert ist. Alternativ oder zusätzlich kann es vorgesehen sein, dass eine Vergleichsvorgabe eine Information über eine Erfassungsgrößenauswahl umfasst, wobei die Vergleichsvorgabe bspw. in Abhängigkeit von dem eingestellten Lebensmittel ausgewählt wird, und bei der Erfassung (nur) die Erfassungsgrößen erfasst werden, welche durch die Erfassungsgrößenauswahl der ausgewählten Vergleichsvorgabe vorgegeben sind, so dass insbesondere bei Auswahl eines ersten zubereiteten Lebensmittels mindestens eine andere Erfassungsgröße erfasst wird, als bei Auswahl eines zweiten zubereiteten Lebensmittels. Insbesondere dient dabei die Erfassungsgrößenauswahl auch zur Parametrisierung der Analyse. Bevorzugt kann dabei die Vergleichsvorgabe mit der Erfassungsgrößenauswahl und/oder nur die Erfassungsgrößenauswahl aus einer (z. B. elektronischen) Datenbank ausgelesen werden. Dies ermöglicht den flexiblen Einsatz von unterschiedlichen Lebensmitteln.

Ebenfalls Gegenstand der Erfindung ist eine Küchenmaschine mit mindestens einer Bearbeitungsvorrichtung und/oder einer Überwachungsvorrichtung, wobei in einem Zubereitungsbetrieb die Bearbeitungsvorrichtung zur zumindest teilweise automatischen Zubereitung von Lebensmitteln ansteuerbar ist, und die Überwachungsvorrichtung zumindest zwei Sensoren aufweist, und durch einen ersten Sensor mindestens ein erster Erfassungswert durch eine erste Erfassung von einer ersten Erfassungsgröße der Küchenmaschine ermittelbar ist, und insbesondere durch einen zweiten Sensor mindestens ein zweiter Erfassungswert durch eine zweite Erfassung von einer zweiten Erfassungsgröße der Küchenmaschine ermittelbar ist, wobei sich die zweite Erfassungsgröße von der ersten Erfassungsgröße unterscheidet. Hierbei ist es insbesondere vorgesehen, dass die Überwachungsvorrichtung eine Verarbeitungsvorrichtung umfasst, und durch die Verarbeitungsvorrichtung zumindest eine Analyseinformation in Abhängigkeit von dem ersten Erfassungswert und/oder von dem zweiten Erfassungswert bestimmbar ist und eine zeitabhängige Analyse der Analyseinformation zur Bestimmung eines für einen Zustand der Zubereitung spezifischen Analyseergebnisses (z. B. durch die Verarbeitungsvorrichtung) durchführbar ist, wobei in Abhängigkeit von dem Analyseergebnis mindestens ein Steuerungssignal zur Beeinflussung des Zubereitungsbetriebs ausgebbar ist. Damit bringt die erfindungsgemäße Küchenmaschine die gleichen Vorteile mit sich, wie sie bereits ausführlich für ein erfindungsgemäßes Verfahren beschrieben worden sind. Darüber hinaus ist die erfindungsgemäße Küchenmaschine dazu ausgeführt, ein erfindungsgemäßes Verfahren durchzuführen,

Weiter kann es im Rahmen der Erfindung vorgesehen sein, dass die Bearbeitungsvorrichtung zumindest einen Antrieb und/oder einen durch den Antrieb betreibbares Bearbeitungswerkzeug, insbesondere ein Rührwerk der Küchenmaschine, umfasst, und vorzugsweise die Überwachungsvorrichtung elektrisch mit dem Antrieb derart verbunden ist, dass eine Erfassung zumindest einer der Erfassungsgrößen durch die Überwachungsvorrichtung durchführbar ist. Die Erfassung kann dabei bspw. durch einen Sensor der Überwachungsvorrichtung erfolgen, welcher bspw. baulich getrennt von der Überwachungsvorrichtung (z. B. elektrisch und/oder über Funk mit der Überwachungsvorrichtung verbunden) z. B. im Bereich des zubereiteten Lebensmittels und/oder den hierfür vorgesehenen Bereich der Küchenmaschine angeordnet ist. Alternativ oder zusätzlich ist es denkbar, dass der erste Sensor und/oder der zweite Sensor jeweils die Erfassung am Lebensmittel durchführen und vorzugsweise im Bereich und/oder zumindest teilweise innerhalb eines Rührgefäßes der Küchenmaschine angeordnet sind, um somit insbesondere zuverlässig die Erfassungsgrößen erfassen zu können.

Des Weiteren kann es vorgesehen sein, dass die Küchenmaschine ein Rührgefäß zur Aufnahme des Lebensmittels aufweist, wobei insbesondere das Rührgefäß zur Erhaltung der Temperatur des Lebensmittels als Thermobehälter und/oder doppelwandig ausgeführt ist. Bspw. kann der erste und/oder der zweite und/oder ein weiterer Sensor vorgesehen sein und/oder im Bereich des Rührgefäßes derart angeordnet sein, dass eine Temperatur innerhalb des Rührgefäßes durch den Sensor und/oder durch Erfassung der Erfassungsgrößen ermittelbar ist. Damit kann bspw. die Temperatur erhalten und/oder überwacht werden.

Weiter ist es denkbar, dass der (erste und/oder zweite und/oder ein weiterer) Sensor in einem Rührgefäß der Küchenmaschine integriert ist, und vorzugsweise eine Erfassung von Erfassungsgrößen innerhalb und/oder außerhalb des Rührgefäßes durchführt, wobei das Rührgefäß bevorzugt lösbar in eine Rührgefäß-Aufnahme der Küchenmaschine einsetzbar ist. Alternativ oder zusätzlich ist es auch denkbar, dass der Sensor derart nachrüstbar ausgeführt ist, dass der Sensor in die Küchenmaschine und/oder in einem Rührgefäß der Küchenmaschine und/oder einem Deckel des Rührgefäßes lösbar einsetzbar ist, vorzugsweise einsteckbar ist. Somit kann bspw. ein bestehender Sensor ausgetauscht werden und/oder ein neuer Sensor nachgerüstet werden, um bspw. das erfindungsgemäße Verfahren für zusätzliche Lebensmittel und/oder zusätzliche Erfassungsgrößen durchführen zu können.

Ferner ist es im Rahmen der Erfindung denkbar, dass eine Rührgefäß-Aufnahme der Küchenmaschine und/oder ein in die Rührgefäß-Aufnahme einsetzbares Rührgefäß der Küchenmaschine und/oder ein auf das Rührgefäß aufsetzbarer Deckel des Rührgefäßes zumindest einen elektrischen Kontakt aufweist, um eine elektrische Verbindung zu einem elektrischen Stromkreis der Küchenmaschine im eingesetzten und/oder aufgesetzten Zustand herzustellen, vorzugsweise zur Energieversorgung des Sensors und/oder zur Datenübertragung (z. B. von dem Sensor an die Überwachungsvorrichtung), wobei bevorzugt der elektrische Kontakt elektrisch mit dem Sensor, insbesondere sowohl im eingesetzten und/oder aufgesetzten als auch außerhalb des eingesetzten und/oder aufgesetzten Zustands, verbunden ist. Damit kann eine zuverlässige Überwachung des Lebensmittels, insbesondere durch Erfassung der Erfassungsgrößen durch den Sensor, durchgeführt werden. Der Sensor ist dabei bspw. der erste Sensor und/oder der zweite Sensor und/oder ein weiterer Sensor.

Bevorzugt ist die zeitabhängige Analyse eine Analyse von zeitlich aufeinanderfolgenden (Erfassungs-) Werten, vorzugsweise einer Zeitreihe. Besonders bevorzugt umfasst die zeitabhängige Analyse statistische Methoden zur Vorhersage (Prädiktion) der künftigen Entwicklung der Zeitreihe und/oder Erfassungswerte und/oder der Erfassungsgrößen. Dabei bietet eine Vorhersage den Vorteil, dass trotz einer hohen Latenzzeit, d. h. einer Verzögerung zwischen dem Eintreten des Zustands der Zubereitung und dem Vorliegen des entsprechenden Analyseergebnisses, rechtzeitig das Steuerungssignal ausgegeben werden kann. Die zeitabhängige Analyse bietet damit den Vorteil, dass zuverlässig und frühzeitig ein künftiger Fertigstellungs- und/oder sonstiger gewünschter Zustand bei der Zubereitung des Lebensmittels erkennt bzw. bestimmt werden kann. Dies ermöglicht die frühzeitige Einflussnahme auf die Zubereitung, um bspw. rechtzeitig den Zubereitungsbetrieb deaktivieren zu können. Mit anderen Worten dient das Steuerungssignal bevorzugt dazu, einen Zustand der Zubereitung zu erhalten, welcher zeitlich dem Zustand der Zubereitung, für welchen das bestimmte Analyseergebnis spezifisch ist, nachfolgt. Somit kann die zeitabhängige Analyse, welche bspw. auch zeitbegrenzt und/oder echtzeitfähig durchgeführt wird, die Beeinflussung des Zubereitungsbetriebs und/oder die Bestimmung des Zustands der Zubereitung und/oder die Vorhersage des gewünschten Fertigstellungszeitpunkts vor dem zeitlichen Erreichen und/oder Überschreiten des Fertigstellungszeitpunkts durchführen und/oder initiieren.

Es ist ferner denkbar, dass die Küchenmaschine zumindest die eine und/oder mindestens zwei und/oder mindestens drei und/oder mehrere Bearbeitungsvorrichtungen aufweist, welche bevorzugt jeweils mindestens ein Bearbeitungswerkzeug umfassen, vorzugsweise zumindest ein Rührwerk und/oder mindestens ein Heizelement. Insbesondere kann jede Bearbeitungsvorrichtung jeweils einen Sensor umfassen, wobei sich die jeweiligen Sensoren z. B. voneinander unterscheiden, um bspw. jeweils eine andere Erfassungsgröße ermitteln zu können. Weiter kann es vorgesehen sein, dass die Bearbeitungsvorrichtung zumindest einen elektrischen Motor (z. B. Elektromotor), bevorzugt zum Betreiben des Rührwerks umfasst. Zudem kann die Bearbeitungsvorrichtung vorzugsweise mindestens einen Temperatursensor und/oder mindestens eine Waage und/oder mindestens einen Stromsensor und/oder mindestens einen Spannungssensor umfassen, wobei die jeweiligen Bearbeitungsvorrichtungen auch unterschiedlich voneinander ausgebildet sein können. Bspw. ist eine erste Bearbeitungsvorrichtung vorgesehen, welche das Rührwerk umfasst, und eine zweite Bearbeitungsvorrichtung vorgesehen, welche insbesondere das Heizelement und/oder den Temperatursensor umfasst. Ferner umfasst die Küchenmaschine vorzugsweise ein Gehäuse, welches eine Aufnahme für ein Rührgefäß aufweist. Das Rührgefäß ist bspw. durch einen Deckel verschließbar und weist insbesondere einen Handgriff auf. Insbesondere ist das zuzubereitende Lebensmittel in das Rührgefäß einfüllbar und/oder aufnehmbar. Das Rührwerk und/oder das Heizelement sind bevorzugt im Inneren des Rührgefäßes angeordnet, und können insbesondere auf das Lebensmittel im Rührgefäß einwirken. Auch kann es vorgesehen sein, dass die Küchenmaschine zumindest ein Bedienfeld aufweist, welches vorzugsweise mindestens ein Display, bevorzugt einen Touchscreen, umfasst. Das Display wird dabei bspw. als Eingabe- und/oder als Ausgabemittel für einen Bediener der Küchenmaschine eingesetzt. Auch können ggf. weitere Eingabemittel, wie ein Drehregler und/oder ein Stellschalter und/oder dergleichen vorgesehen sein. Über das Bedienfeld, insbesondere über das Display in Verbindung mit den weiteren Eingabemitteln, kann ein Bediener der Küchenmaschine bspw. Ansteuerungsparameter und/oder Betriebsparameter, wie die Rührwerksdrehzahl und/oder die Heiztemperatur und/oder die Zeitdauer für den Rührvorgang (Rührdauer) und/oder verschiedene Programme für die Zubereitung einstellen und/oder aktivieren und/oder deaktivieren. Auch ist es denkbar, dass das Bedienfeld und/oder die Küchenmaschine derart ausgeführt ist, dass über den Touchscreen der einzustellende Betriebsparameter und/oder eine Rezeptauswahl auswählbar ist und/oder über das weitere Eingabemittel der Wert für den ausgewählten Betriebsparameter und/oder ein konkretes Rezept einstellbar/auswählbar ist.

Weiter ist es insbesondere möglich, dass der Bediener über das Bedienfeld das Lebensmittel (d. h. insbesondere die Art des Lebensmittels) und/oder der Zubereitung und/oder das Rezept für die Küchenmaschine einstellen kann. Weiter kann es vorgesehen sein, dass der Bediener, insbesondere über das Bedienfeld und/oder die weiteren Eingabemittel, den Zubereitungsbetrieb der Küchenmaschine aktiveren und/oder deaktivieren kann. In dem Zubereitungsbetrieb wird bspw. das Rührwerk und/oder ein Motor zum Betreiben des Rührwerks gestartet, vorzugsweise für eine bestimmte zeitliche Rührdauer. Spätestens nach dieser vorbestimmten Rührdauer kann bspw. der Zubereitungsbetrieb deaktiviert werden, wodurch auch der Betrieb des Rührwerks und/oder des Motors beendet werden. Vorzugsweise ist bei einem aktivierten Zubereitungsbetrieb die Rührwerksdrehzahl größer als 0 und bei deaktiviertem Zubereitungsbetrieb die Rührwerksdrehzahl gleich 0. Die Deaktivierung des Zubereitungsbetriebs und/oder die Einstellung von Zubereitungsparametern und/oder Betriebsparametern, wie der Rührwerksdrehzahl und/oder der Dauer des Rührvorgangs, kann dabei bspw. manuell und/oder (teilweise) automatisch, bspw. programmgesteuert und/oder rezeptabhängig (bspw. in Abhängigkeit vom ausgewählten Rezept) und/oder lebensmittelabhängig (z. B. in Abhängigkeit vom Zustand des Lebensmittels), erfolgen. Dies ermöglicht somit insbesondere die zumindest teilweise automatische Zubereitung des Lebensmittels.

Es ist weiter denkbar, dass die Erfassungsgröße und/oder der Zubereitungsparameter (und/oder der Ansteuerungsparameter) dem Betriebsparameter entspricht und/oder den Betriebsparameter umfasst, und/oder die Erfassungsgröße und/oder der Erfassungswert vom Betriebsparameter abhängig ist. Jedes Rezept und/oder jedes eingestellte Lebensmittel umfasst vorzugsweise mindestens ein (digital gespeichertes) Programm für die Zubereitung.

Bevorzugt umfasst die Küchenmaschine und/oder eine mobile Vorrichtung (wie ein mobiler Datenspeicher oder Rezeptchip) für die Küchenmaschine eine nicht-flüchtige Datenspeichereinheit, in welcher Zubereitungsparameter und/oder eine Vergleichsvorgabe und/oder eine Erfassungsgrößenauswahl und/oder voreingestellte Betriebsparameter und/oder Programme und/oder Rezepte gespeichert sind, welche bspw. in Abhängigkeit von einer Eingabe des Bedieners ausgewählt werden. Diese Betriebsparameter umfassen dabei insbesondere auch Ansteuerungsparameter, bspw. die Rührwerksdrehzahl und/oder die Werte für elektrische Parameter zur Ansteuerung des Motors des Rührwerks, um eine bestimmte Rührwerksdrehzahl zu erzielen. Die Zubereitungsparameter umfassen dabei vorzugsweise zumindest teilweise die Betriebsparameter und/oder Ansteuerungsparameter und/oder weitere Parameter, welche für die Zubereitung von Relevanz sind. Insbesondere umfassen die Zubereitungsparameter jeweils Informationen über z. B.:
- Eigenschaften der Küchenmaschine und/oder der Ansteuerung und/oder Erfassungsgrößen und/oder physikalische Größen, welche für die Zubereitung des Lebensmittels relevant sind und/oder von einem Zustand der Zubereitung abhängig sind,
- die Art der zu erfassenden Erfassungsgrößen, wie ein Motorsignal des Motors des Rührwerks, welches insbesondere von der Ansteuerung des Motors und/oder von der Drehzahl und/oder dem Drehmoment des Rührwerks abhängig ist,
- die Anzahl der zu erfassenden Erfassungsgrößen.

Bevorzugt wird unter dem Zustand der Zubereitung im Rahmen der Erfindung der Zustand des Lebensmittels bei der Zubereitung und/oder Eigenschaften der Zubereitung verstanden, wie bspw. ein künftiger optimaler Fertigstellungszeitpunkt der Zubereitung und/oder des Lebensmittels. Bevorzugt ist damit das Analyseergebnis für den Zustand der Zubereitung spezifisch, d. h. das Analyseergebnis lässt insbesondere eine Schlussfolgerung zu, welchen Zustand das zubereitete Lebensmittel zum Zeitpunkt der Ermittlung der Messwerte hatte und/oder wie die Zubereitung zum Erzielen eines optimalen Ergebnisses beeinflusst werden kann.

Bspw. kann anhand des Analyseergebnisses ein Fertigstellungszeitpunkt für die Zubereitung geschätzt werden und damit die Dauer des Rührvorgangs angepasst werden und/oder die Rührwerksdrehzahl angepasst werden. Die Drehzahl kann bspw. in einem Bereich von 10 Umdrehungen pro Minute (U/min) bis 600 U/min, vorzugsweise zwischen 40 U/min bis 500 U/min liegen und/oder variieren. Die Rührdauer ist bspw. in einem Bereich zwischen 10 Sekunden bis 1000 Sekunden, vorzugsweise 20 Sekunden bis 400 Sekunden einstellbar. Dies ermöglicht die optimale Zubereitung von einer Vielzahl von verschiedenen Lebensmitteln.

Es kann insbesondere vorgesehen sein, dass die Zubereitung in Abhängigkeit von einer Eingabe eines Bedieners der Küchenmaschine und/oder einer Programmierung der Küchenmaschine durchgeführt wird. Dabei ist es bspw. denkbar, dass der Bediener eine Einstellung und/oder Eingabe an der Küchenmaschine vornimmt, welche Art von Lebensmittel zubereitet werden soll. Dies kann bspw. auch durch die Auswahl eines bestimmten Rezeptes durch den Bediener erfolgen. Anschließend kann es vorgesehen sein, dass in Abhängigkeit von der Art des Lebensmittels eine bestimmte Vergleichsvorlage und/oder eine bestimme Erfassungsgrößenauswahl und/oder ein bestimmtes Programm und/oder bestimmte Werte für Betriebsparameter und/oder Ansteuerungsparameter für die zumindest teilweise automatische Zubereitung durch die Küchenmaschine geladen und/oder eingestellt und/oder ausgelesen werden. Insbesondere kann auch durch die Auswahl des Rezeptes und/oder durch die Eingabe des Bedieners und/oder in Abhängigkeit von der Art des Lebensmittels direkt oder indirekt mindestens eine Vorgabe, wie die Art und/oder die Anzahl und/oder die Auswahl der zu erfassenden Erfassungsgrößen, bestimmt werden. Die Vorgaben und/oder Programme und/oder Werte sind dazu bspw. digital in einer nicht-flüchtigen Datenspeichereinheit, insbesondere der Küchenmaschine und/oder einer mobilen Vorrichtung gespeichert. Somit kann ein flexibles Programmieren der Küchenmaschine für unterschiedliche Lebensmittelarten ermöglicht werden.

Das Lebensmittel bzw. die Art des Lebensmittels ist dabei bspw. Sahne und/oder Reis und/oder Mehl, so dass bspw. ein erstes Lebensmittel, insbesondere Sahne, und/oder ein zweites Lebensmittel, insbesondere Reis, für die Zubereitung und/oder gemäß der Programmierung vorgesehen sein kann. In Abhängigkeit von der Art des Lebensmittels können auch unterschiedliche zeitabhängige Analysen und/oder eine unterschiedliche Parametrisierung für die zeitabhängige Analyse genutzt werden. Auch kann es vorgesehen sein, dass in Abhängigkeit von einem durch den Bediener ausgewählten Lebensmittel unterschiedliche Erfassungsgrößen erfasst werden und/oder charakteristische Verläufe der Analyseinformation und/oder des Analyseergebnisses vorgegeben und/oder auslesbar und/oder vergleichbar sind, welche für das jeweilige Lebensmittel spezifisch sind. So kann bspw. für ein erstes Lebensmittel ein erster für dieses Lebensmittel charakteristischer Verlauf der Analyseinformation bzw. des Analyseergebnisses vorgesehen und/oder auswertbar und für ein zweites Lebensmittel ein zweiter für dieses zweite Lebensmittel charakteristischer Verlauf der Analyseinformation bzw. des Analyseergebnisses vorgesehen und/oder auswertbar sein. Des Weiteren kann vorzugsweise für ein erstes Lebensmittel eine erste Auswahl (d. h. insbesondere Art und/oder Anzahl) von Erfassungsgrößen und für ein zweites Lebensmittel eine zweite Auswahl von Erfassungsgrößen bestimmt werden, welche erfasst werden sollen. Bevorzugt kann außerdem der charakteristische Verlauf in Abhängigkeit von der Auswahl der Erfassungsgrößen bestimmt werden. Die Auswertung des entsprechenden charakteristischen Verlaufs, z. B. durch Vergleich des charakteristischen Verlaufs mit dem ermittelten Verlauf der Messwerte und/oder mit dem Analyseergebnis, ermöglicht dann einen Rückschluss auf den Zustand des jeweiligen Lebensmittels, sodass bspw. in Abhängigkeit hiervon das Steuerungssignal, z. B. als binäres und/oder elektronisches Signal, ausgegeben wird. Bspw. erfolgt bei Sahne die Beeinflussung, insbesondere Deaktivierung, des Zubereitungsbetriebs dann, wenn durch die zeitabhängige Analyse und/oder anhand des Analyseergebnisses der zeitabhängigen Analyse ein steigender Verlauf eines Motorsignals des Motors des Rührwerks festgestellt wird. Bevorzugt erfolgt bei Reis die Beeinflussung, insbesondere Deaktivierung, des Zubereitungsbetriebs dann, wenn durch die zeitabhängige Analyse und/oder anhand des Analyseergebnisses der zeitabhängigen Analyse ein abfallender Verlauf des Motorsignals detektiert wird. Dies hat den Vorteil, dass flexibel durch die zeitabhängige Analyse unterschiedliche Lebensmittel optimal zubereitet werden können.

Es ist denkbar, dass eine Filterung der ermittelten Erfassungswerte, insbesondere der ersten und/oder zweiten und/oder weiterer Erfassungswerte, vorzugsweise zur Generierung von Merkmalen, erfolgt. Insbesondere ist es dabei möglich, dass zur Filterung der ermittelten Erfassungswerte, insbesondere eines Erfassungswertverlaufs der zeitlich aufeinander folgenden Erfassungswerte, zumindest eine der folgenden Filtermethoden einzeln oder in Kombination (direkt oder indirekt) an den ermittelten Erfassungswerten (insbesondere Messwerten) durchgeführt werden:
- Medianfilter
- Gleitender Mittelwert
- Tiefpass erster und/oder zweiter und/oder mindestens vierter Ordnung.

Bevorzugt erfolgt die Filterung der ermittelten Erfassungswerte (d. h. der ungefilterten ermittelten Erfassungswerte) derart, dass durch die Filterung gefilterte ermittelte Erfassungswerte bestimmt werden. Insbesondere wird anhand der gefilterten ermittelten Erfassungswerte die Analyseinformation bestimmt. Bevorzugt umfasst die Filterung dabei eine erste Filterung von ermittelten ersten Erfassungswerten und/oder eine zweite Filterung von ermittelten zweiten Erfassungswerten, sodass durch die Filterung gefilterte ermittelte erste und/oder gefilterte ermittelte zweite Erfassungswerte bestimmt werden. Besonders bevorzugt unterscheidet sich die (erste) Filtermethode der ersten Filterung von der (zweiten) Filtermethode der zweiten Filterung, insbesondere in Abhängigkeit von der (Art der) jeweiligen (ersten und/oder zweiten) Erfassungsgröße. Dies ermöglicht eine weitere Verbesserung der Analyse, insbesondere durch eine Reduzierung von Fehlereinflüssen, und damit eine Optimierung der Zubereitung.

Es ist weiter denkbar, dass eine Filterung der ermittelten Erfassungswerte und/oder ein Generieren von mindestens einem Merkmal anhand der ermittelten Erfassungswerte und/oder anhand des Analyseergebnisses erfolgt. Bevorzugt umfasst das Filtern und/oder das Generieren des Merkmals und/oder das Bestimmen der Analyseinformation und/oder die zeitabhängige Analyse eine (numerische) Bestimmung einer Differenz und/oder eines Gradienten und/oder einen Vergleich von (z. B. benachbarten) gefilterten und/oder ungefilterten ermittelten Erfassungswerten (d. h. auch z. B. erste und zweite Erfassungswerte). Es ist dabei denkbar, dass die Filterung und/oder das Bestimmen der Analyseinformation und/oder das Generieren der Merkmale anhand des zeitlichen Verlaufs der (z. B. ersten und/oder zweiten) Erfassungswerte, d. h. anhand bspw. jeweils mindestens 2 und/oder mindestens 4 und/oder mindestens 5 und/oder mindestens 10 und/oder mindestens 100 (benachbarter, ermittelter erster und/oder zweiter) Erfassungswerten, erfolgt. Es kann somit eine zuverlässige Informationsbasis für die Analyse geschaffen werden.

Durch die zeitabhängige Analyse wird bevorzugt der zeitliche Verlauf ausgewertet, welcher bspw. erste und/oder zweite Erfassungswerte umfassen kann, die jeweils in einem Zeitintervall über mindestens 1 s und/oder mindestens 2 s und/oder mindestens 5 s und/oder mindestens 10 s (durch die Erfassung) ermittelt wurden. Insbesondere können Schritte des erfindungsgemäßen Verfahrens zeitlich aufeinanderfolgend oder in beliebiger Reihenfolge und/oder wiederholt durchgeführt werden. Zumindest einer dieser Schritte und/oder die Filterung und/oder die Generierung der Merkmale (Merkmalsgenerierung) können dabei bspw. software- und/oder computerimplementiert und/oder elektronisch und/oder durch eine elektrische, insbesondere integrierte, Schaltung durchgeführt werden. Insbesondere kann es vorgesehen sein, dass für die Filterung und/oder zeitabhängige Analyse digitale und/oder diskrete Erfassungswerte ausgewertet werden. Alternativ oder zusätzlich kann es vorgesehen sein, dass die zeitabhängige Analyse und/oder zumindest einer der Schritte des erfindungsgemäßen Verfahrens wiederholt und/oder zyklisch, insbesondere über den gesamten Zubereitungsvorgang, durchgeführt werden, um jeweils das Analyseergebnis wiederholt bzw. zyklisch zu bestimmen. Insbesondere kann es vorgesehen sein, dass die zeitabhängige Analyse und/oder zumindest einer der Schritte des erfindungsgemäßen Verfahrens zumindest einmal pro Sekunde und/oder zumindest zehnmal pro Sekunde und/oder zumindest einhundertmal pro Sekunde während des Zubereitungsbetriebs, d. h. während der Zubereitung, durchgeführt werden. Weiter ist es bspw. vorgesehen, dass zumindest einer der Schritte des erfindungsgemäßen Verfahrens zumindest teilweise von einer Verarbeitungsvorrichtung durchgeführt werden, bevorzugt durch arithmetische Operationen und/oder eine Signalverarbeitung. Diese Schritte gewährleisten dabei, dass zuverlässig die Zubereitung des Lebensmittels beeinflusst werden kann, um optimale Zubereitungsergebnisse zu erzielen.

Weiter ist es denkbar, dass zumindest ein Schwellenwert, insbesondere bei zumindest einem der Schritte des erfindungsgemäßen Verfahrens, insbesondere zur Plausibilisierung des Analyseergebnisses, ausgewertet wird, wobei bevorzugt wenigstens ein Vergleichswert, wie mindestens ein ermittelter und/oder gefilterter (erster und/oder zweiter) Erfassungswert und/oder mindestens ein generiertes Merkmal und/oder das Analyseergebnis und/oder eine zeitliche Rührdauer, mit dem Schwellenwert verglichen wird. Bevorzugt kann der Schwellenwert abhängig von der Art und/oder Anzahl der erfassten Erfassungsgrößen sein. Der Schwellenwert kann bspw. einen oberen und einen unteren Schwellenwert umfassen, d. h. hierdurch definierten Schwellenwertbereich. Bspw. kann vorgesehen sein, dass nur dann ein positives Entscheidungsergebnis bestimmt wird und/oder nur dann ein Steuerungssignal zur Deaktivierung des Zubereitungsbetriebs ausgegeben wird, wenn der Vergleichswert kleiner als der obere Schwellenwert und/oder größer als der untere Schwellenwert ist. Damit ist es z. B. möglich, Nachteile bei der Zubereitung aufgrund mehrdeutiger Analyseergebnisse zu vermeiden.

Weiter ist es denkbar, dass eine Vergleichsvorgabe, vorzugsweise mit einem zeitlichen Verlaufsmuster, für die Analyse ausgewertet wird. Alternativ oder zusätzlich wird auch ein Gradient der Erfassungswerte und/oder eines zeitlichen Verlaufs der (gefilterten oder ungefilterten) Erfassungswerte (Erfassungswertverlaufs) und/oder von Mittelwerten des Verlaufs und/oder dergleichen bei der Analyse ausgewertet, um z. B. das Analyseergebnis zu bestimmen. Die Vergleichsvorgabe umfasst bevorzugt ein vorgegebenes Muster, insbesondere ein zeitliches Verlaufsmuster und/oder einen vorgegebenen charakteristischen Verlauf der Analyseinformation und/oder einer Häufigkeitsverteilung. Insbesondere kommt für einen Vergleich mit der Vergleichsvorgabe bei der Analyse eine Mustererkennung und/oder eine Merkmalsgenerierung zum Einsatz. Die Generierung der Merkmale (Merkmalsgenerierung) umfasst bpsw. eine Berechnung einer zeitlichen Differenz und/oder einer Varianz und/oder eines Trends (in Bezug z. B. auf einen Abfall oder Anstieg des Erfassungswertverlaufs).

Bevorzugt kann das zubereitete und/oder zuzubereitende (d. h. für die Zubereitung vorgesehene und/oder in die Küchenmaschine eingefüllte) Lebensmittel zumindest eine der folgenden Lebensmittel umfassen, wobei z. B. in Abhängigkeit von dem Lebensmittel eine Vergleichsvorgabe ausgewählt wird und/oder eine Erfassungsgrößenauswahl erfolgt:
- Nudeln,
- Reis,
- Schlagsahne,
- Teig,
- Saucen und/oder Emulsionen,
- Eismasse.

Optional können auch ein erster und mindestens ein zweiter Schwellenwert vorgesehen sein, wobei vorzugsweise ein erster Schwellenwert für den bzw. mit dem ersten Erfassungswert und ein zweiter Schwellenwert für den bzw. mit dem zweiten Erfassungswert ausgewertet bzw. verglichen wird. Auch ist es denkbar, dass der erste und zweite oder alternativ ein oberer und unterer Schwellenwert vorgesehen sind, welche insbesondere einen Wertebereich definieren. Mit anderen Worten wird bspw. eine Entscheidungsdurchführung, d. h. die Bestimmung des Entscheidungsergebnisses, nur dann durchgeführt und/oder nur dann ein positives Entscheidungsergebnis bestimmt und/oder berücksichtigt, wenn der (erste und/oder zweite) Erfassungswert und/oder das generierte Merkmal geringer als ein oberer (erster) Schwellenwert und/oder größer als ein unterer (erster) Schwellenwert ist. Bevorzugt wird (als zusätzliche Bedingung) die Entscheidungsdurchführung nur dann durchgeführt und/oder nur dann ein positives Entscheidungsergebnis bestimmt und/oder berücksichtigt, wenn die Rührdauer geringer als ein oberer (zweiter) Schwellenwert und/oder größer als ein unterer (zweiter) Schwellenwert ist. Hierdurch erfolgt somit eine Begrenzung des Zeitabschnitts für die Entscheidungsdurchführung durch den zweiten Schwellenwert, wobei bspw. die Schwellenwerte empirisch definiert und/oder lebensmittelabhängig (d. h. bspw. in Abhängigkeit von einem durch den Bediener ausgewählten und/oder eingestellten Lebensmittel festgelegt werden) und/oder erfassungsgrößenabhängig (d. h. in Abhängigkeit von der Art der Erfassungsgröße) sind. Dies ermöglicht es insbesondere, jedem der erfassten Erfassungsgrößen jeweils einen spezifischen oberen und unteren Schwellenwert zuzuweisen, um so die Zubereitung weiter zu verbessern.

Die Schwellenwerte sind z. B. in einer nicht-flüchtigen Datenspeichereinheit, wie einem ROM (Read Only Memory) oder Flash-Speicher, digital persistent gespeichert, und können für ein entsprechendes Lebensmittel ausgelesen werden. Die Rührdauer kann bspw. dadurch ermittelt werden, dass bei Aktivierung des Zubereitungsbetriebs und/oder Erhöhung der Rührwerksdrehzahl ein (elektronischer) Timer gestartet und/oder bei Ermittlung der Erfassungswerte und/oder bei mindestens einem der Schritte des erfindungsgemäßen Verfahrens ausgelesen wird. Es kann somit zuverlässig eine Plausibilisierung des Analyseergebnisses erfolgen. Der erste und/oder zweite und/oder obere und/oder untere Schwellenwert kann dabei bspw. in einem Bereich zwischen 1 Sekunde und 5000 Sekunden, insbesondere 10 Sekunden bis 1000 Sekunden, vorzugsweise 20 Sekunden bis 400 Sekunden liegen. Die Schwellenwerte können vorzugsweise derart empirisch definiert sein, dass der (untere) Schwellenwert und/oder ein (unterer) erster und/oder ein (unterer) zweiter Schwellenwert den bestimmten Wert bzw. die Rührdauer angibt, an welchem (empirisch festgelegt) frühestens der gewünschte Zustand der Zubereitung (z. B. die gewünschte Konsistenz des Lebensmittels) auftritt. Weiter können die Schwellenwerte bevorzugt derart empirisch definiert sein, dass der (obere) Schwellenwert und/oder ein (oberer) erster und/oder ein (oberer) zweiter Schwellenwert den bestimmten Wert bzw. die Rührdauer angibt, an welchem (empirisch festgelegt) spätestens der gewünschte Zustand der Zubereitung (z. B. die gewünschte Konsistenz des Lebensmittels) auftritt. Neben den Schwellenwerten können zur Plausibilisierung insbesondere auch weitere ermittelte Werte, wie Temperaturwerte und/oder Gewicht des Lebensmittels, ausgewertet werden. Insbesondere wird spätestens bei einer Entscheidungsdurchführung die Plausibilisierung durchgeführt und/oder ein positives Entscheidungsergebnis nur dann ausgegeben, wenn die Plausibilisierung positiv ist, d. h. die durch die Schwellenwerte vorgegebenen Grenzwerte eingehalten werden.

Es kann von Vorteil sein, wenn im Rahmen der Erfindung die zeitabhängige Analyse eine Zeitreihenanalyse, vorzugsweise eine (statistische) Auswertung der Häufigkeitsverteilung, umfasst, wobei hierzu insbesondere die Analyseinformation und/oder die ermittelten Erfassungswerte und/oder die Häufigkeitsverteilung zeitlich gepuffert werden, wobei vorzugsweise die zeitabhängige Analyse und/oder die Zeitreihenanalyse echtzeitfähig durchgeführt wird. Der Ausdruck "echtzeitfähig" bezieht sich vorzugsweise darauf, dass das Analyseergebnis spätestens innerhalb einer vordefinierten Maximalzeitdauer durch die zeitabhängige Analyse bestimmt wird. Es ist somit vorzugsweise eine sogenannte "weiche" oder alternativ auch "feste" Echtzeitanforderung im Zubereitungsbetrieb vorgesehen, um den Zubereitungsbetrieb rechtzeitig beeinflussen zu können. Gemäß der weichen Echtzeitanforderung wird das Analyseergebnis nur dann weiter verarbeitet bzw. ist das Entscheidungsergebnis nur dann positiv, wenn die vordefinierte Maximalzeitdauer eingehalten und/oder unterschritten wird. Um eine besonders schnelle Verarbeitung zu gewährleisten, ist vorzugsweise eine zeitliche Pufferung vorgesehen, insbesondere durch einen schnellen Cache-Speicher. Die Zeitreihenanalyse umfasst bspw. die Durchführung einer Frequenzanalyse und/oder einer Autokorrelationsfunktion und/oder einer Inferenzstatistische Analyse und/oder eine Trendanalyse und/oder eine Analyse einer Differenz bzw. Steigung des zeitlichen Erfassungswert-Verlaufs.

Die Überwachungsvorrichtung weist insbesondere eine Erfassungsvorrichtung auf, um Erfassungswerte bspw. an dem Antrieb zu erfassen und/oder die Erfassungsgrößen zu erfassen. Hierzu kann die Überwachungsvorrichtung auch zumindest einen oder mehrere Sensoren aufweisen, welche in der Küchenmaschine integriert sind und/oder an der Küchenmaschine angeordnet sind. Der Sensor und/oder die Sensoren können dabei jeweils bspw. als Temperatursensor und/oder Spannungssensor und/oder Stromsensor und/oder Drehzahlsensor und/oder Drehmomentsensor ausgebildet sein. Entsprechend sind die Erfassungswerte bspw. als Spannungserfassungswerte und/oder Stromerfassungswerte und/oder Drehmomenterfassungswerte und/oder Drehzahlerfassungswerte und/oder Temperaturerfassungswerte ausgeführt. Dies hat den Vorteil, dass zuverlässig die relevanten Erfassungswerte ermittelt werden können.

Vorzugsweise ist auch ein dritter Sensor zur Erfassung einer dritten Erfassungsgröße und/oder ein vierter Sensor zur Erfassung einer vierten Erfassungsgröße und/oder weitere Sensoren zur Erfassung weiterer Erfassungsgrößen vorgesehen. Bevorzugt werden sämtliche Erfassungswerte, welche durch die Erfassung der sämtlichen Erfassungsgrößen ermittelt wurden, zur Bestimmung der Analyseinformation genutzt, um die Zubereitung durch die Heranziehung möglichst vieler Erfassungsgrößen besonders stabil und zuverlässig anpassen zu können.

Gemäß einem weiteren Vorteil kann vorgesehen sein, dass die Bearbeitungsvorrichtung und/oder die Überwachungsvorrichtung in der Küchenmaschine integriert ist, und insbesondere die Ermittlung der Erfassungswerte direkt durch Erfassung der Erfassungsgrößen an der Bearbeitungsvorrichtung innerhalb Küchenmaschine erfolgt. Beispielsweise können die Bearbeitungsvorrichtung und/oder die Überwachungsvorrichtung innerhalb eines Gehäuses (und/oder zumindest teilweise an dem Gehäuse) der Küchenmaschine angeordnet sein und/oder fest mit weiteren Bestandteilen der Küchenmaschine verbunden sein. Die Erfassung der jeweiligen Erfassungsgröße kann bspw. dadurch erfolgen, dass ein Motorstrom eines Motors eines Rührwerks der Küchenmaschine gemessen wird. Zur Erfassung z. B. einer ersten Erfassungsgröße wie dem Motorstrom kann bspw. ein Spannungsabgriff und/oder ein Shuntwiderstand, insbesondere als ein erster Sensor, an einer elektrischen Leitung eines Antriebs der Küchenmaschine vorgesehen sein. Zur Erfassung z. B. einer zweiten Erfassungsgröße wie einer Temperatur kann bspw. ein zweiter Sensor als Temperaturfühler ausgeführt sein. Dies hat den Vorteil, dass in einfacher Weise die Erfassungswerte ermittelt werden können und damit ein Zustand der Zubereitung ermittelt werden kann.

Es ist ferner denkbar, dass die Überwachungsvorrichtung eine elektrische und/oder elektronische Verarbeitungsvorrichtung aufweist, und/oder dass die Verarbeitungsvorrichtung und/oder die Überwachungsvorrichtung zumindest eine Elektronikkomponente aufweist. Die Elektronikkomponente umfasst bspw. einen Mikroprozessor und/oder einen digitalen Signalprozessor und/oder einen nicht-flüchtigen Datenspeicher und/oder eine Anwendungsspezifische integrierte Schaltung (ASIC) und/oder ein Field Programmable Gate Array (FPGA) und/oder dergleichen. Dies ermöglicht eine schnelle und zuverlässige Durchführung der zeitabhängigen Analyse. Insbesondere umfasst die Elektronikkomponente und/oder ein mit der Überwachungsvorrichtung verbundener oder darin integrierter Sensor, auch ggf. einen Analog-Digital-Wandler, welcher bspw. zur Erfassung der Erfassungsgröße dient.

Ebenfalls Gegenstand der Erfindung ist ein Computerprogrammprodukt zum Betreiben einer Küchenmaschine, insbesondere einer erfindungsgemäßen Küchenmaschine. Hierbei ist vorgesehen, dass das Computerprogrammprodukt dazu ausgeführt ist, ein erfindungsgemäßes Verfahren durchzuführen. Damit bringt das erfindungsgemäße Computerprogrammprodukt die gleichen Vorteile mit sich, wie sie ausführlich mit Bezug auf ein erfindungsgemäßes Verfahren und eine erfindungsgemäße Küchenmaschine beschrieben worden sind. Zudem kann ein erfindungsgemäßes Computerprogrammprodukt geeignet sein, durch eine Verarbeitungsvorrichtung einer erfindungsgemäßen Küchenmaschine ausgelesen und/oder ausgeführt zu werden, insbesondere zur Durchführung des erfindungsgemäßen Verfahrens. Ein erfindungsgemäßes Computerprogrammprodukt ist bspw. eine Firmware, welche vorzugsweise zum Betreiben der erfindungsgemäßen Küchenmaschine eingesetzt wird und/oder digital an die Küchenmaschine bzw. die Datenspeichereinheit und/oder Verarbeitungsvorrichtung übertragbar ist. Weiter kann das erfindungsgemäße Computerprogrammprodukt auch als digitales Speichermedium, insbesondere als Flash-Speicher und/oder digitales optisches Speichermedium, wie eine CD und/oder DVD und/oder Blu-ray, ausgeführt sein.

Es kann ferner im Rahmen der Erfindung vorgesehen sein, dass (insbesondere durch die Überwachungsvorrichtung) zumindest während des Zubereitungsbetriebs und/oder bei einer aufzuzeichnenden Zubereitung (des bzw. im Zubereitungsbetrieb) eine Zubereitungsaufzeichnung der Zubereitung erfolgt bzw. erstellt wird. Hierzu werden (bspw. wiederholt und/oder zyklisch und/oder einmalig) weitere Erfassungswerte und/oder weitere Aufzeichnungen des zubereiteten Lebensmittels und/oder zumindest ein Ansteuerungswert und/oder zumindest ein Ergebniswert (während der Zubereitung) ermittelt. Das Ermitteln des mind. einen Ansteuerungswertes erfolgt bspw. durch eine Ansteuerungswerterfassung von mind. einem Ansteuerungsparameter, wobei der Ansteuerungsparameter für die (aufzuzeichnende) Zubereitung spezifisch ist. Das Ermitteln des mind. einen Ergebniswertes erfolgt bspw. durch eine Ergebniswerterfassung von mind. einem Ergebnisparameter, wobei der Ergebnisparameter für das Ergebnis der Zubereitung und/oder für die Zubereitung spezifisch ist. Anschließend kann insbesondere ein Aufzeichnen des ermittelten Ansteuerungswertes und/oder des ermittelten Ergebniswertes in einer Zubereitungsaufzeichnung (z. B. als digital und/oder persistent gespeicherte Information) erfolgen, sodass vorzugsweise diese der aufzuzeichnenden Zubereitung (als eine aufgezeichnete Zubereitung) zugeordnet ist. Der Ansteuerungswert umfasst dabei bspw. mind. einen Erfassungswert und/oder mind. eine Aufzeichnung des zubereiteten Lebensmittels. Der Ansteuerungsparameter umfasst bspw. mind. eine Erfassungsgröße und/oder mind. eine durch einen Sensor der Küchenmaschine erfasste Größe und/oder eine Bedienereingabe und/oder dergleichen. Insbesondere umfasst der Ergebniswert zumindest einen Erfassungswert und/oder zumindest eine Aufzeichnung des zubereiteten Lebensmittels. Vorzugsweise umfasst der Ergebnisparameter zumindest eine Erfassungsgröße und/oder zumindest eine Bedienereingabe und/oder zumindest eine Größe, welche durch einen Sensor der Küchenmaschine erfasst wird. Besonders bevorzugt unterscheiden sich dabei der Ansteuerungsparameter und der Ergebnisparameter voneinander. Dies hat den Vorteil, dass eine Zubereitung aufgezeichnet und insbesondere zu einem späteren Zeitpunkt reproduziert werden kann. Hierzu ist es insbesondere vorgesehen, dass die Ansteuerungsparameter, welche insbesondere zur Steuerung der Zubereitung dienen, möglichst umfassend und/oder vollständig erfasst und vorzugsweise durch die Ansteuerungswerte aufzeichenbar und/oder reproduzierbar sind. Der Ergebniswert und/oder der Ergebnisparameter dient dabei insbesondere dazu, das Ergebnis der aufgezeichneten Zubereitung aufzuzeichnen und/oder zu reproduzieren, z. B. einen Zustand des zubereiteten Lebensmittels.

Der Ansteuerungsparameter ist dabei insbesondere ein derartiger Parameter, insbesondere eine derartige Erfassungsgröße, welcher Informationen über die konkrete Zubereitung, insbesondere die Ansteuerung der Zubereitung, und/oder eines einzelnen Zubereitungsschrittes der Zubereitung umfasst. So umfasst der Ansteuerungsparameter bspw. Informationen über eine Drehzahl eines Rührwerks der Küchenmaschine und/oder einer Drehrichtung (z. B. Links- oder Rechtslauf) des Rührwerks, und/oder über eine eingestellte Temperatur eines Heizelementes bzw. einer Heizung der Küchenmaschine, und/oder über eine Zubereitungsdauer, insbesondere eines einzelnen Zubereitungsschrittes. Z. B. bei der Zubereitung von Röstzwiebeln beeinflusst der Ansteuerungsparameter den Röstgrad der Zwiebeln, da hierdurch bspw. die Temperatur zur Erhitzung der Zwiebeln und/oder die Dauer der Erhitzung bestimmt wird. Vorzugsweise ist dabei der Ergebnisparameter spezifisch für das Ergebnis der Zubereitung, z. B. den Röstgrad der Zwiebeln. Der Ergebnisparameter kann somit bspw. eine visuelle Aufzeichnung des Lebensmittels, z. B. durch einen Kamerasensor, und/oder eine sonstige physikalische Größe der Küchenmaschine, wie z. B. ein Motorstrom, sein. Anhand des Motorstroms kann bspw. die Konsistenz des Lebensmittels, wie z. B. Schlagsahne, überprüft werden. Auch ist es denkbar, dass der Ergebnisparameter eine Bedienereingabe betrifft, z. B. zur Verkürzung der Zubereitungszeit. Es kann bspw. möglich sein, dass wenn der gewünschte Röstgrad erreicht ist, durch eine Bedienereingabe eine Verkürzung der durch das Rezept vorgegebenen Zubereitungsdauer erfolgt. Entsprechend kann bspw. der Ergebnisparameter eine solche benutzerspezifische Anpassung umfassen. Auch ist es denkbar, dass der Ergebnisparameter eine Anpassung aufgrund erfasster Umgebungsparameter betrifft, welche bspw. automatisiert durchgeführt wird, um die Zubereitung unter verschiedenen Umgebungsbedingungen zu optimieren.

Weiter kann es möglich sein, dass zur Reproduktion von der aufgezeichneten Zubereitung zunächst ein Auswerten der Zubereitungsaufzeichnung erfolgt, insbesondere wenn ein weiterer Zubereitungsbetrieb für eine weitere Zubereitung initiiert wird, und vorzugsweise wenn eine Rezeptauswahl erfolgt. Weiter kann anschließend ein Steuerungssignal ausgegeben werden, insbesondere in Abhängigkeit von der Auswertung und/oder von der Zubereitungsaufzeichnung, sodass die weitere Zubereitung an die Zubereitungssaufzeichnung angepasst erfolgt. Insbesondere kann somit das Ergebnis der aufgezeichneten Zubereitung und/oder zumindest ein Zubereitungsschritt der aufgezeichneten Zubereitung und/oder ein Verlauf der Ansteuerungsparameter der aufgezeichneten Zubereitung reproduziert werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung einer erfindungsgemäßen Küchenmaschine,
- Figur 2: eine weitere schematische Darstellung einer erfindungsgemäßen Küchenmaschine,
- Figur 3-8: schematische Darstellungen zur Visualisierung eines erfindungsgemäßen Verfahrens, und
- Figur 9: eine schematische Darstellung eines Erfassungswertverlaufs.

In den nachfolgenden Figuren werden für die gleichen technischen Merkmale auch von unterschiedlichen Ausführungsbeispielen die identischen Bezugszeichen verwendet.

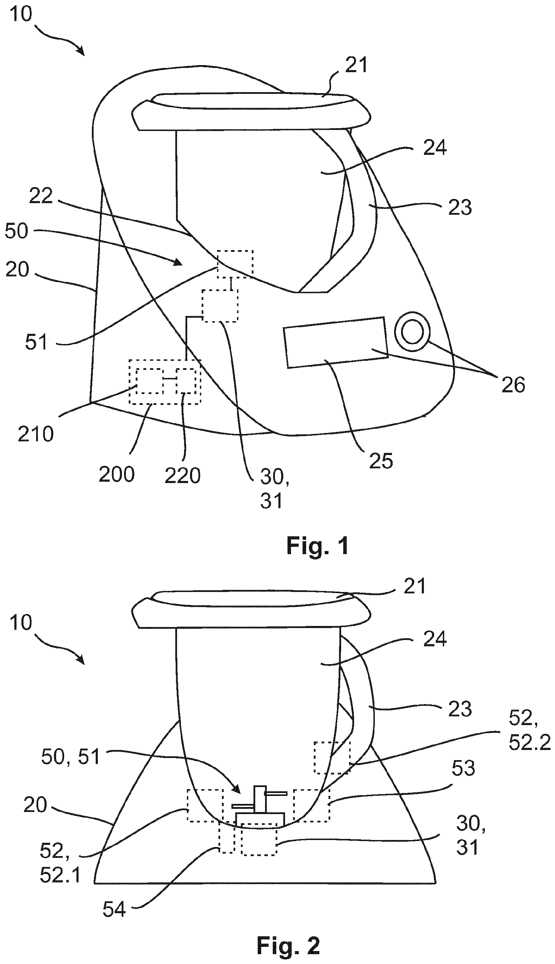

In Figur 1 und 2 ist schematisch eine erfindungsgemäße Küchenmaschine 10 gezeigt. Die Küchenmaschine 10 umfasst ein Gehäuse 20, welches eine Aufnahme 22 für ein Rührgefäß 24 aufweist. Das Rührgefäß 24 ist dabei bspw. durch einen Deckel 21 verschließbar, und weist vorzugsweise einen Handgriff 23 auf. Ein Rührwerk 51 und/oder ein Heizelement 53 und/oder mindestens ein Sensor 52 ist bevorzugt im Bereich des Rührgefäßes 24 und/oder im Inneren des Rührgefäßes 24 angeordnet. Weiter können auch ein erster Sensor 52.1 und ein zweiter Sensor 52.2 vorgesehen sein, welche jeweils z. B. an unterschiedlichen Bereichen der Küchenmaschine 10, innerhalb oder außerhalb der Küchenmaschine 10, zur Erfassung unterschiedlicher Erfassungsgrößen 102, angeordnet sind. Zudem umfasst die Küchenmaschine 10 ein Bedienfeld 26, welches bspw. ein Display 25, vorzugsweise einen Touchscreen 25, umfasst. Hierbei dient das Display 25 insbesondere sowohl als Eingabe- als auch als Ausgabemittel. Über das Bedienfeld 26 wird insbesondere ermöglicht, dass ein Bediener der Küchenmaschine 10 Zubereitungsparameter und/oder Betriebsparameter, wie die Rührwerksdrehzahl, die Heiztemperatur und/oder die Zeitdauer der Zubereitung bzw. des Rührens und/oder verschiedene Programme der Küchenmaschine 10, einstellen und/oder aktivieren und/oder deaktivieren kann. Weiter kann über das Display 25 auch die Ausgabe von rezeptbezogenen Anweisungen und/oder Hinweisen und/oder grafischen Bedienelementen erfolgen. Über die grafischen Bedienelemente, welche bevorzugt Bestandteil einer grafischen Benutzeroberfläche sind, kann als Eingabemittel eine Bedienung der erfindungsgemäßen Küchenmaschine 10 durchgeführt werden. Die Rezepte sind bspw. in einem nicht-flüchtigen Datenspeicher 220 der Küchenmaschine 10 gespeichert. Insbesondere ermöglicht das Eingabemittel auch die Aktivierung und/oder Deaktivierung eines Zubereitungsbetriebs und/oder die Einstellung der Art der Zubereitung und/oder der Art des zuzubereitenden Lebensmittels und/oder (direkt oder indirekt) der Art bzw. Anzahl der zu erfassenden Erfassungsgrößen 102.

Wie in den Figuren 1 und 2 dargestellt ist, umfasst die Küchenmaschine 10 zumindest eine Bearbeitungsvorrichtung 50, welche insbesondere zumindest ein Bearbeitungswerkzeug 51, wie ein Rührwerk 51, umfasst. Zur Überwachung und/oder Ansteuerung 160, insbesondere der Bearbeitungsvorrichtungen 50, ist außerdem mindestens eine Überwachungsvorrichtung 200 vorgesehen, welche z. B. eine Verarbeitungsvorrichtung 210 und/oder den Datenspeicher 220 umfasst. Weiter kann es vorgesehen sein, dass die Bearbeitungsvorrichtung 50 und/oder weitere Bearbeitungsvorrichtungen 50 den zumindest einen Sensor 52 und/oder eine Heizung 53 und/oder eine Waage 54 umfassen, welche bspw. in der Küchenmaschine 10 integriert sind. Die Waage 54 dient insbesondere dazu, eine Gewichtskraft auf das Rührgefäß 24 zu erfassen bzw. zu messen. Hierzu wird das Wägeobjekt bspw. auf und/oder in das Rührgefäß 24 gelegt und/oder eingefüllt. Die Heizung 53 ist bspw. derart ausgestaltet, dass das Lebensmittel im Rührgefäß 24 durch die Heizung 53 erhitzt werden kann, vorzugsweise bis auf Temperaturen in einem Bereich von 10°C bis 150°C, vorzugsweise 30°C bis 120°C.

In Figur 2 ist zudem schematisch ein Antrieb 30 der Küchenmaschine 10 gezeigt, welcher einen (elektrischen) Motor 31 aufweist. Dabei ist der Antrieb 30 und/oder der Motor 31 derart mit zumindest einer Bearbeitungsvorrichtung 50 und/oder mit zumindest einem Bearbeitungswerkzeug 51, insbesondere dem Rührwerk 51, verbunden, dass eine Kraftübertragung von dem Motor 31 und/oder einer Antriebswelle des Antriebs 30 an die Bearbeitungsvorrichtung 50 und/oder das Bearbeitungswerkzeug 51 und/oder das Rührwerk 51 durchgeführt wird. Es kann vorgesehen sein, dass die Überwachungsvorrichtung 200 zur Überwachung elektrisch zumindest mit dem Sensor 52 und/oder der Bearbeitungsvorrichtung 50 und/oder dem Antrieb 30 und/oder dem Motor 31 des Antriebs 30 verbunden ist.

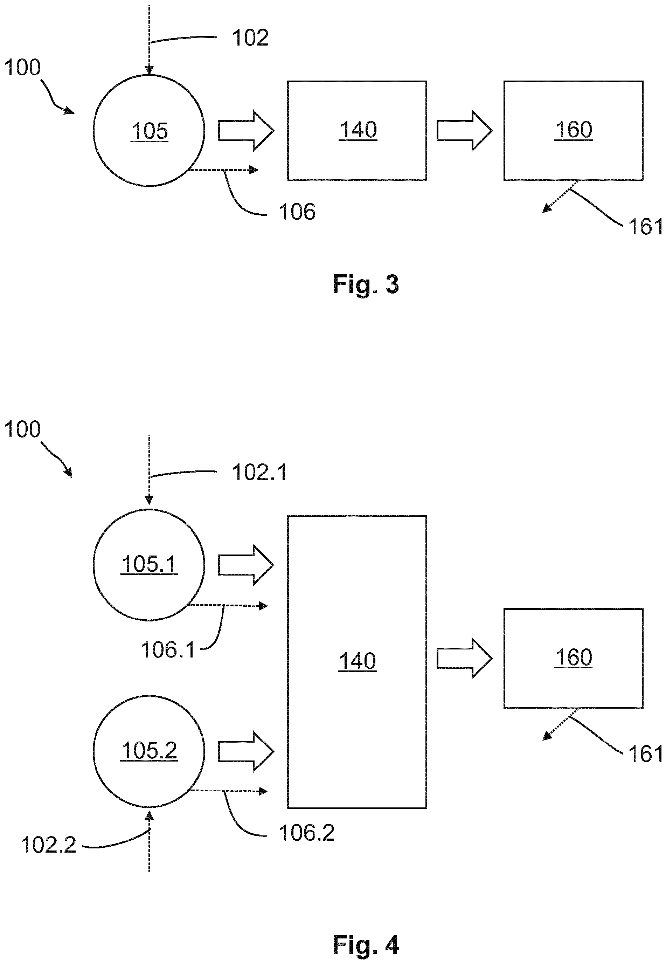

In Figur 3 ist schematisch ein erfindungsgemäßes Verfahren 100 visualisiert. Dabei wird gemäß einem ersten Verfahrensschritt zumindest eine Erfassung 105 von zumindest einem oder zwei für einen Zustand der Zubereitung spezifischen Erfassungsgrößen 102 an der Küchenmaschine 10 durchgeführt. Durch die Erfassung 105 werden dabei zeitlich aufeinanderfolgende Erfassungswerte 106 ermittelt, wobei z. B. die Erfassungswerte 106 für wenigstens eine Erfassungsgröße 102, insbesondere einen Zubereitungsparameter, der Küchenmaschine 10 spezifisch sind, d. h. bspw. proportional zum Motorstrom des Motors 31 des Antriebs 30 der Küchenmaschine 10. Anschließend erfolgt eine zeitabhängige Analyse 140 von zumindest einer Analyseinformation, wobei die Analyseinformation in Abhängigkeit von den zeitlich aufeinanderfolgenden Erfassungswerten 106 bestimmt wird. Ein Analyseergebnis der zeitabhängigen Analyse 140 hat dabei Einfluss auf eine Ansteuerung 160, insbesondere der Bearbeitungsvorrichtung 50. Dabei wird in Abhängigkeit von dem Analyseergebnis mindestens ein Steuerungssignal 161 ausgegeben, welches den Zubereitungsbetrieb, d. h. bspw. den Betrieb der Bearbeitungsvorrichtung 50, beeinflusst. Das Steuerungssignal 161 wird dabei bspw. durch eine Verarbeitungsvorrichtung 210 und/oder durch die Überwachungsvorrichtung 200 und/oder durch eine nicht dargestellte Steuerungsvorrichtung ausgegeben.

In Figur 4 wird das erfindungsgemäße Verfahren näher beschrieben. Es ist hierbei zu sehen, dass (z. B. durch eine Überwachungsvorrichtung 200) eine Ermittlung von Erfassungswerten 106 durch Erfassung 105 von (mindestens für einen Zustand der Zubereitung spezifischen) Erfassungsgrößen 102 an der Küchenmaschine 10 durchgeführt wird. Dabei wird mindestens ein erster Erfassungswert 106.1 durch eine erste Erfassung 105.1 von einer ersten Erfassungsgröße 102.1 ermittelt und mindestens ein zweiter Erfassungswert 106.2 durch eine zweite Erfassung 105.2 von einer zweiten Erfassungsgröße 102.2 ermittelt, wobei sich die zweite Erfassungsgröße 102.2 von der ersten Erfassungsgröße 102.1 unterscheidet. Anschließend erfolgt die Bestimmung von mindestens einer Analyseinformation in Abhängigkeit von dem ersten Erfassungswert 106.1 und/oder dem zweiten Erfassungswert 106.2. Sodann wird eine zeitabhängige Analyse 140 durchgeführt, welche z. B. anhand der Analyseinformation ein Analyseergebnis bestimmt. Durch eine Steuerung 160 und/oder Ansteuerung 160 wird anschließend in Abhängigkeit von dem Analyseergebnis ein Steuerungssignal 161 ausgegeben.

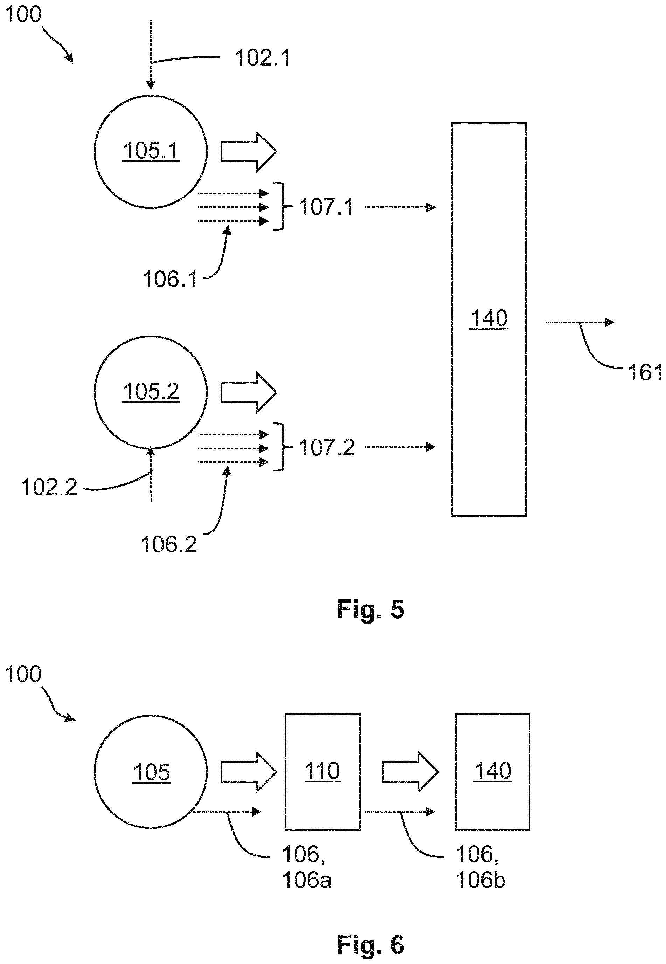

In Figur 5 ist zudem gezeigt, dass aus dem mindestens einen ermittelten Erfassungswert 106.1 auch ein erster (zeitlicher) Verlauf 107.1 und aus dem mindestens zweiten ermittelten Erfassungswert 106.2 ein zweiter (zeitlicher) Verlauf 107.2 ermittelt werden kann, insbesondere durch Zwischenspeicherung der Erfassungswerte 106. Anschließend kann bspw. noch eine Filterung 110 des ersten Verlaufs 107.1 und/oder des zweiten Verlaufs 107.2 erfolgen, und der jeweilige gefilterte oder ungefilterte Verlauf 107 zur Analyse 140 herangezogen werden.

In Figur 6 ist gezeigt, dass nach einer Erfassung 105 zur Ermittlung der Erfassungswerte 106 die Erfassungswerte 106 einer weiteren Signalverarbeitung unterzogen werden können, um insbesondere daraus resultierend eine Analyseinformation zu bestimmen. Im Zuge der Signalverarbeitung erfolgt bspw. zunächst eine Filterung 110 der ermittelten (ungefilterten) Erfassungswerte 106, 106a, wodurch die gefilterten Erfassungswerte 106, 106b bestimmt werden. Dies ermöglicht z. B. auch eine Glättung eines zeitlichen Verlaufs 107 der Erfassungswerte 106. Anschließend kann es vorgesehen sein, dass eine Auswertung der gefilterten Erfassungswerte 106b erfolgt, vorzugsweise eine Generierung von Merkmalen 121 und/oder eine Merkmalsauswertung. Zur Merkmalsauswertung können bspw. die generierten Merkmale 121 mit einem Schwellenwert 171 verglichen werden und/oder eine Häufigkeitsanalyse durchgeführt werden. Anschließend erfolgt z. B. eine zeitabhängige Analyse 140 in Abhängigkeit von den gefilterten (ermittelten) Erfassungswerten 106, 106b.

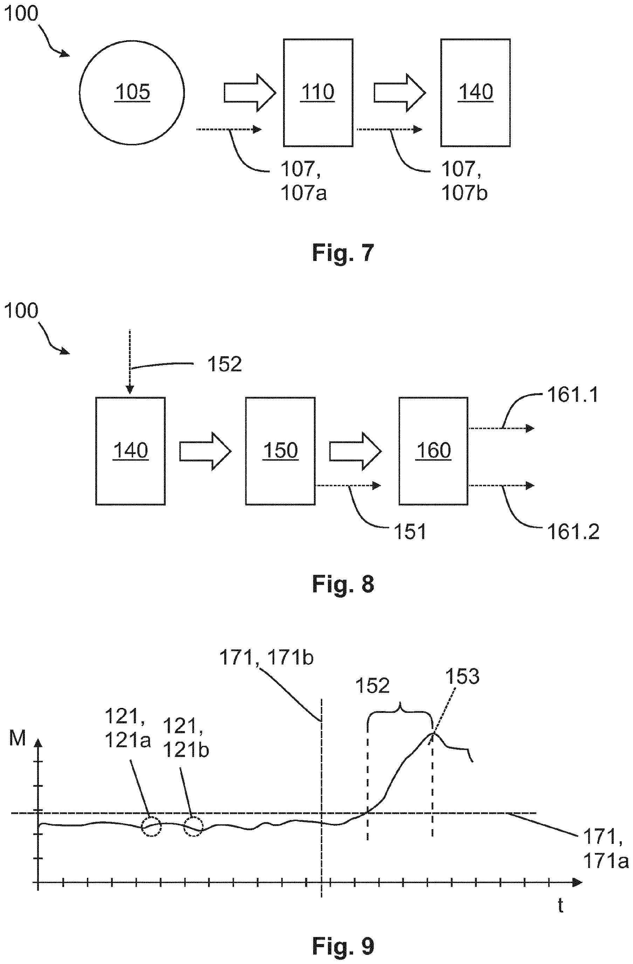

Auch ist es denkbar, dass alternativ oder zusätzlich eine Filterung des zeitlichen Verlaufs 107 der Erfassungswerte 106 erfolgt. In Figur 7 ist dies schematisch anhand eines ungefilterten Verlaufs 107a von ungefilterten Erfassungswerten 106a gezeigt. Die ungefilterten Erfassungswerte 106a werden dabei z. B. durch Erfassung 105 einer Messgröße M als Erfassungsgröße 102, wie eines Motorsignals, ermittelt. Zur Glättung der ungefilterten Erfassungswerte 106a kann eine Filterung 110 des Verlaufs 107 durchgeführt werden, wodurch ein gefilterter zeitlicher Verlauf 107b ermittelt wird. Die Filterung 110 ermöglicht dabei eine verbesserte und zuverlässigere Auswertung der Erfassungswerte 106 und/oder des Verlaufs 107 z. B. durch die zeitabhängige Analyse 140.

Die zeitabhängige Analyse 140 kann z. B. anhand des gefilterten zeitlichen Verlauf 107b und/oder anhand des ungefilterten zeitlichen Verlauf 107a und/oder anhand der generierten Merkmale 121 und/oder anhand der gefilterten Erfassungswerte 106b und/oder anhand der ungefilterten Erfassungswerte 106a erfolgen. Vorzugsweise ist die zeitabhängige Analyse 140 eine Häufigkeitsanalyse. Wie in Figur 8 gezeigt ist, wird in Abhängigkeit von einem Analyseergebnis der zeitabhängigen Analyse 140 ein positives oder negatives Entscheidungsergebnis 151 bestimmt, wobei hierzu eine Entscheidungsdurchführung 150 durchgeführt wird.

Insbesondere wird ein positives Entscheidungsergebnis 151 nur dann bestimmt, wenn das Analyseergebnis einen zukünftigen bestimmten (gewünschten) Zustand der Zubereitung indiziert, bspw. einen optimalen Fertigstellungszeitpunkt der Zubereitung. Bei einem negativen Entscheidungsergebnis 151 wird dabei der Zubereitungsbetrieb nicht beeinflusst und/oder kein Steuerungssignal 161 ausgegeben. Mit anderen Worten wird mit der Zubereitung des Lebensmittels im Zubereitungsbetrieb normal fortgefahren. Insbesondere kann es allerdings darüber hinaus noch weitere Abbruchbedingungen für den Zubereitungsbetrieb geben, so dass bspw. bei einer Überschreitung einer maximalen Zeitdauer des Zubereitungsbetriebs der Zubereitungsbetrieb automatisch deaktiviert wird, unabhängig von dem Analyseergebnis. Nachdem das negative Entscheidungsergebnis 151 bestimmt wurde, wird (bspw. automatisch und/oder nach einer bestimmten Zeitdauer und/oder zyklisch) erneut zumindest eine Erfassung 105 durchgeführt und/oder eine zeitabhängige Analyse 140 durchgeführt. Wenn allerdings ein positives Entscheidungsergebnis 151 bestimmt wird, so erfolgt eine Ansteuerung 160 der Bearbeitungsvorrichtung 50 durch die Ausgabe eines Steuerungssignals 161 zur Beeinflussung des Zubereitungsbetriebs (siehe Figur 8). Zur Entscheidungsdurchführung 150 kann ferner auch mindestens ein Schwellenwert 171 zur Plausibilisierung herangezogen werden.

In Figur 8 ist weiter dargestellt, dass mindestens ein erstes und zweites Steuerungssignal 161.1, 161.2 ausgegeben werden kann, welche sich voneinander z. B. in der Art der Steuerung unterscheiden. Insbesondere ist hierbei vorgesehen, dass das erste Steuerungssignal 161.1 ausgegeben wird, wenn ein erstes Analyseergebnis bestimmt wird, sodass die Zubereitung in einer ersten Weise beeinflusst wird, insbesondere durch Reduzierung einer Drehzahl eines Rührwerks 51 der Küchenmaschine 10 in einem zeitkritischen Bereich der zeitabhängigen Analyse 140, und das zweite Steuerungssignal 161.2 ausgegeben wird, wenn ein zweites Analyseergebnis bestimmt wird, sodass die Zubereitung in einer zweiten Weise beeinflusst wird, welche sich von der ersten Weise unterscheidet, insbesondere durch eine Beendigung des Zubereitungsbetriebs.

Figur 9 zeigt einen typischen zeitlichen Verlauf 107, insbesondere gefilterten Verlauf 107b, der Erfassungswerte 106, bspw. für die Zubereitung von Schlagsahne. Die dargestellten gefilterten Erfassungswerte 106b sind bspw. abhängig von einem Motorsignal M als Erfassungsgröße 102. Es ist erkennbar, dass zunächst (bis zum zweiten Schwellenwert 171b) nur geringfügige Schwankungen auftreten, und somit ein gleichbleibender Trend erkennbar ist. Die Merkmale 121 können bspw. dadurch generiert werden, dass eine Differenz und/oder ein Gradient der Erfassungswerte 106 bestimmt wird. Durch eine Merkmalsauswertung kann dann bspw. das generierte Merkmal 121 herangezogen werden, um ein bestimmtes Muster in dem Verlauf 107 zu erkennen. Hierzu kann bspw. auch die zeitabhängige Analyse 140 anhand der Erfassungswerte 106 und/oder generierten Merkmale 121 durchgeführt werden. Zur Plausibilisierung des Analyseergebnisses können dabei die Schwellenwerte 171 dienen. Die Schwellenwerte 171 sind insbesondere empirisch definiert, so dass bspw. ein zweiter Schwellenwert 171b den Zeitpunkt angibt, an welchem frühestens der gewünschte Zustand der Zubereitung (z. B. die gewünschte Konsistenz der Schlagsahne) auftritt. Im gekennzeichneten Bereich 152 ist dabei ein Verlaufsmuster 152 erkennbar, welches den gewünschten Zeitpunkt der Zubereitung indiziert. Das Auftreten des Verlaufsmusters 152, also z. B. die spezifische Veränderung des Gradienten und/oder des Trends, ist dabei insbesondere durch den Einfluss des Lebensmittels auf die Bearbeitungsvorrichtung 50 bedingt. So kann bspw. die aufgrund der Zubereitung veränderte Konsistenz dazu führen, dass ein Rührwiderstand ansteigt oder absteigt und damit der Motorstrom des Elektromotors 31 für das Rührwerk 51 entsprechend ansteigt oder absteigt wird. Die Erfassungswerte 106 sind daher abhängig von der Zubereitung (bspw. dem Rührwiderstand) und das Verlaufsmuster 152 der Erfassungswerte 106 kann somit insbesondere zur Auswertung der Zubereitung und/oder Konsistenz dienen.

Das Verlaufsmuster 152 ist bspw. empirisch vordefiniert. Es kann möglich sein, dass durch die zeitabhängige Analyse 140 und/oder Entscheidungsdurchführung 150 eine Vergleichsvorgabe wie das Verlaufsmuster 152 detektiert wird. Die Detektion des Verlaufsmusters 152 ermöglicht dann eine frühzeitige Vorhersage eines kritischen Punktes 153, an welchem der gewünschte Zustand der Zubereitung auftritt. Insbesondere können die Schritte des erfindungsgemäßen Verfahrens 100 derart angepasst und/oder z. B. durch eine Echtzeitanforderung zeitlich begrenzt sein, dass trotz einer Latenzzeit der Auswertung das Steuerungssignal 161 rechtzeitig ausgegeben wird, um den Zubereitungsbetrieb beim zeitlichen Erreichen des gewünschten Zustands bzw. des kritischen Punktes 153 zu beeinflussen und/oder zu deaktivieren.

Weiter kann es möglich sein, dass die Erfassungswerte 106, insbesondere der gefilterte Verlauf 107b zur Generierung von Merkmalen herangezogen werden kann. So kann durch eine Auswertung bspw. ein erstes generiertes Merkmal 121a und ein zweites generiertes Merkmals 121b generiert werden. Das erste generierte Merkmal 121a indiziert dabei bspw. eine Steigung (d. h. eine positive Differenz) und das weiter generierte Merkmal 121b indiziert dabei bspw. einen Abfall (d. h. eine negative Differenz). Weiter ist es möglich, dass durch die Merkmalsauswertung und/oder die zeitabhängige Analyse 140 eine Vergleichsvorgabe, insbesondere ein Verlaufsmuster 152, in dem zeitlichen Verlauf 107 detektiert wird. Hierzu wird bspw. ein Histogramm ausgewertet. Wie in Figur 9 dargestellt ist, entspricht das Verlaufsmuster 152 (in Abhängigkeit von dem zubereiteten Lebensmittel) bspw. einem durchgehenden Anstieg der Erfassungswerte 106 über einen bestimmten Zeitraum. Auch kann lebensmittelabhängig eine erste Vergleichsvorgabe, wie ein erstes Verlaufsmuster 152, einen durchgehenden Anstieg und eine zweite Vergleichsvorgabe, wie ein zweites Verlaufsmuster 152, einen durchgehenden Abfall der Erfassungswerte 106 umfassen. In Abhängigkeit von einer Bedienereinstellung wird dann die entsprechende erste oder zweite Vergleichsvorgabe berücksichtigt.

Eine Plausibilisierung des Analyseergebnisses, insbesondere auch die Begrenzung des Wertebereichs der Erfassungswerte 106 für die Entscheidungsdurchführung 150, wird durch den Schwellenwert 171 ermöglicht. Der Schwellenwert 171 umfasst insbesondere mindestens einen ersten Schwellenwert 171, 171a, welcher in Figur 7 durch eine gestrichelte horizontale Linie repräsentiert ist. Es wird eine Entscheidungsdurchführung 150 nur dann durchgeführt und/oder nur dann ein positives Entscheidungsergebnis 151 bestimmt, wenn die aktuell ermittelten Erfassungswerte 106 oberhalb des ersten Schwellenwerts 171, 171a liegen. Die Begrenzung des Zeitabschnitts für die Entscheidungsdurchführung 150 wird bevorzugt durch einen zweiten Schwellenwert 171, 171b ermöglicht, welcher durch eine vertikale gestrichelte Linie repräsentiert ist. Es wird entsprechend nur dann eine Entscheidungsdurchführung 150 durchgeführt und/oder nur dann ein positives Entscheidungsergebnis 151 bestimmt, wenn die zeitliche Dauer des Zubereitungsbetriebs den zweiten Schwellenwert 171b zeitlich übersteigt.

Die voranstehende Erläuterung der Ausführungsformen beschreibt die vorliegende Erfindung ausschließlich im Rahmen von Beispielen.

### Bezugszeichenliste

- 10: Küchenmaschine
- 20: Gehäuse
- 21: Deckel
- 22: Rührgefäß-Aufnahme
- 23: Handgriff
- 24: Rührgefäß
- 25: Display
- 26: Bedienfeld

- 30: Antrieb
- 31: Motor

- 50: Bearbeitungsvorrichtung
- 51: Bearbeitungswerkzeug, Rührwerk
- 52: Sensor
- 52.1: erster Sensor
- 52.2: zweiter Sensor
- 53: Heizelement
- 54: Waage

- 100: Verfahren
- 102: Erfassungsgröße
- 102.1: erste Erfassungsgröße
- 102.2: zweite Erfassungsgröße
- 105: Erfassung
- 105.1: erster Erfassung
- 105.2: zweite Erfassung
- 106: Erfassungswerte
- 106.1: erste Erfassungswerte
- 106.2: zweite Erfassungswerte
- 106a: ungefilterte Erfassungswerte
- 106b: gefilterte Erfassungswerte
- 107: Verlauf
- 107.1: erster Verlauf
- 107.2: zweiter Verlauf
- 107a: ungefilterter Verlauf
- 107b: gefilterter Verlauf
- 110: Filterung

- 121: generierte Merkmale
- 121a: erstes generiertes Merkmal
- 121b: zweites generiertes Merkmal

- 140: Zeitabhängige Analyse
- 150: Entscheidungsdurchführung
- 151: Entscheidungsergebnisses

- 152: Verlaufsmuster
- 153: kritischer Punkt

- 160: Steuerung
- 161: Steuerungssignals
- 161.1: erstes Steuerungssignal
- 161.2: zweites Steuerungssignal
- 171: Schwellenwert
- 171a: erster Schwellenwert
- 171b: zweiter Schwellenwert

- 200: Überwachungsvorrichtung
- 210: Verarbeitungsvorrichtung

- 220: Nicht-flüchtiger Datenspeicher

- t: Zeit
- M: Messgröße, Motorsignal

## Patentansprüche

1. Verfahren (100) zum Betreiben einer Küchenmaschine (10), wobei in einem Zubereitungsbetrieb mindestens eine Bearbeitungsvorrichtung (50) der Küchenmaschine (10) zur zumindest teilweise automatischen Zubereitung von Lebensmitteln angesteuert wird, und wobei
eine Überwachungsvorrichtung (200) eine Ermittlung von Erfassungswerten (106) durch Erfassung (105) von mindestens zwei für einen Zustand der Zubereitung spezifischen Erfassungsgrößen (102) an der Küchenmaschine (10) durchführt,
**gekennzeichnet durch die nachfolgenden Schritte:**
a) Ermitteln von mindestens einem ersten Erfassungswert (106.1) **durch** eine erste Erfassung (105.1) von einer ersten Erfassungsgröße (102.1),
b) Ermitteln von mindestens einem zweiten Erfassungswert (106.2) **durch** eine zweite Erfassung (105.2) von einer zweiten Erfassungsgröße (102.2), wobei sich die zweite Erfassungsgröße (102.2) von der ersten Erfassungsgröße (102.1) unterscheidet,
c) Bestimmen von zumindest einer Analyseinformation in Abhängigkeit von dem ersten Erfassungswert (106.1) und/oder dem zweiten Erfassungswert (106.2),
d) Durchführen einer zeitabhängigen Analyse (140) der Analyseinformation zur Bestimmung eines für den Zustand der Zubereitung spezifischen Analyseergebnisses,
e) Ausgeben von mindestens einem Steuerungssignal (161) zur Beeinflussung des Zubereitungsbetriebs in Abhängigkeit von dem Analyseergebnis, sodass der Zustand der Zubereitung bei der Zubereitung Berücksichtigung findet, wobei
die zeitabhängige Analyse (140) und/oder die Bestimmung des Analyseergebnisses, derart lernfähig durchgeführt wird, dass das Analyseergebnis und/oder ein Qualitätsergebnis der Zubereitung für eine zukünftige Bestimmung des Analyseergebnisses einer zukünftigen Zubereitung Verwendung findet.

2. Verfahren (100) nach Anspruch 1,
**dadurch gekennzeichnet,**
**dass** der erste und/oder zweite und/oder sämtliche ermittelten Erfassungswerte (106), insbesondere bei der zeitabhängigen Analyse (140), zumindest teilweise miteinander verglichen und/oder kombiniert werden
und/oder dass die erste und/oder zweite Erfassungsgröße (102) jeweils an der Küchenmaschine (10) physikalisch messbare Größen umfassen, welche eine durch die Zubereitung veränderbare Eigenschaft des Lebensmittels jeweils in unterschiedlicher Weise beeinflussen und/oder durch die Eigenschaft beeinflusst werden, sodass sie für einen Zustand der Zubereitung spezifisch sind, wobei vorzugsweise die erste Erfassungsgröße (102.1) und die zweite Erfassungsgröße (102.2) jeweils diese veränderbare Eigenschaft des Lebensmittels in unterschiedlicher Weise beeinflussen und/oder durch die Eigenschaft in unterschiedlicher Weise beeinflusst werden.

3. Verfahren (100) nach einem der vorhergehenden Ansprüche,
**dadurch gekennzeichnet,**
**dass** im Zubereitungsbetrieb periodisch und/oder wiederholt erste Erfassungswerte (106.1) ermittelt werden, und vorzugsweise parallel dazu im Zubereitungsbetrieb periodisch und/oder wiederholt zweite Erfassungswerte (106.2) und/oder weitere Erfassungswerte (106) ermittelt werden, wobei die Analyseinformation aus einem zeitlichen Verlauf (107) der jeweiligen periodisch und/oder wiederholt ermittelten Erfassungswerte (106) bestimmt wird
und/oder dass der zweite Erfassungswert (106.2) außerhalb des Zubereitungsbetriebs, vorzugsweise vor dem Beginn der Zubereitung, ermittelt wird, um insbesondere die darauf folgende Durchführung und/oder eine darauf folgende Auswertung der zeitabhängigen Analyse zur Bestimmung des Analyseergebnisses zu beeinflussen.

4. Verfahren (100) nach einem der vorhergehenden Ansprüche,
**dadurch gekennzeichnet,**
**dass** zeitlich nachfolgend und/oder gleichzeitig zur zeitabhängigen Analyse (140) noch eine weitere Analyse der Analyseinformation erfolgt, vorzugsweise erst nach einem Auftreten eines bestimmten Ereignisses, insbesondere im Zubereitungsbetrieb und/oder außerhalb des Zubereitungsbetriebs, bevorzugt nach Beendigung des Zubereitungsbetriebs, um das Analyseergebnis zu bestimmen, wobei sich die weitere Analyse von der zeitabhängigen Analyse (140) unterscheidet
und/oder dass der Zustand der Zubereitung ein zukünftiger optimaler Fertigstellungszeitpunkt des zubereiteten Lebensmittels bei der Zubereitung ist, wobei das Steuerungssignal (161) zeitlich derart ausgegeben wird, dass eine Deaktivierung des Zubereitungsbetriebs zum Fertigstellungszeitpunkt bewirkt wird, wobei vorzugsweise die Zeitdauer bis zum Erreichen des Fertigstellungszeitpunktes durch eine Berechnung und/oder Vorhersage durch die zeitabhängige Analyse (140) bestimmt wird.

5. Verfahren (100) nach einem der vorhergehenden Ansprüche,
**dadurch gekennzeichnet,**
**dass** ein erstes und ein zweites Steuerungssignal (161.1, 161.2) ausgegeben wird, wobei
- das erste Steuerungssignal (161.1) ausgegeben wird, wenn ein erstes Analyseergebnis bestimmt wird, sodass die Zubereitung in einer ersten Weise beeinflusst wird, insbesondere durch Reduzierung einer Drehzahl eines Rührwerks (51) der Küchenmaschine (10) in einem zeitkritischen Bereich der zeitabhängigen Analyse (140),
- das zweite Steuerungssignal (161.2) ausgegeben wird, wenn ein zweites Analyseergebnis bestimmt wird, sodass die Zubereitung in einer zweiten Weise beeinflusst wird, welche sich von der ersten Weise unterscheidet, insbesondere durch eine Beendigung des Zubereitungsbetriebs.

6. Verfahren (100) nach einem der vorhergehenden Ansprüche,
**dadurch gekennzeichnet,**
**dass** die zweite Erfassungsgröße (102.2) ein Umgebungsparameter außerhalb der Küchenmaschine (10) ist, insbesondere
- eine räumliche und/oder geographische und/oder örtliche Position der Küchenmaschine (10), insbesondere in Form einer GPS-Koordinate der Küchenmaschine (10),
- eine Information über das Lebensmittel und/oder die Zubereitung des Lebensmittels, welche außerhalb der Küchenmaschine (10) gespeichert ist, insbesondere in einer Datenbank, und vorzugsweise über ein Netzwerk und/oder cloudbasiert abgerufen wird,
- eine Produktinformation des Lebensmittels, insbesondere über herstellerbezogene Eigenschaften und/oder über die Zutaten und/oder über das Mindesthaltbarkeitsdatum,
- ein Luftdruck außerhalb der Küchenmaschine (10),
- eine Luftfeuchtigkeit außerhalb der Küchenmaschine (10),
- eine Temperatur außerhalb der Küchenmaschine (10),
- eine Uhrzeit und/oder Tageszeit und/oder ein Datum,
wobei vorzugsweise die erste Erfassungsgröße (102.1) ein Parameter der Zubereitungs-Umgebung innerhalb der Küchenmaschine (10) ist.

7. Verfahren (100) nach einem der vorhergehenden Ansprüche,
**dadurch gekennzeichnet,**
**dass** durch die zeitabhängige Analyse (140) und/oder durch eine weitere Analyse oder Auswertung derart lernfähig durchgeführt wird, , dass das Analyseergebnis und/oder ein Qualitätsergebnis der Zubereitung für eine zukünftige Bestimmung des Analyseergebnisses einer zukünftigen Zubereitung Verwendung findet und/oder dass die zeitabhängige Analyse (140) und/oder die Bestimmung des Analyseergebnisses in Abhängigkeit von einer Parametrisierung erfolgt, wobei vorzugsweise die Parametrisierung vor der Aktivierung des Zubereitungsbetriebs anhand einer benutzerabhängigen Anpassung, insbesondere durch Informationen aus einer Datenbank, erfolgt
und/oder dass bei der zeitabhängigen Analyse (140) mindestens eine Vergleichsvorgabe in Abhängigkeit von einem zubereiteten Lebensmittel ausgewertet wird, wobei, insbesondere für die Berechnung und/oder Vorhersage eines zukünftigen bestimmten Zustands, ein Vergleich der Analyseinformation mit der Vergleichsvorgabe erfolgt, wobei vorzugsweise mindestens ein zeitlicher Analyseverlauf der Analyseinformation mit mindestens einem zeitlichen Verlaufsmuster (152) der Vergleichsvorgabe verglichen wird.

8. Verfahren (100) nach einem der vorhergehenden Ansprüche,
**dadurch gekennzeichnet,**
**dass** die nachfolgenden Schritte vorgesehen sind:
- Einstellen und/oder Auswählen eines zuzubereitenden Lebensmittels durch eine Bedienereingabe an der Küchenmaschine (10),
- Auswählen einer Vergleichsvorgabe in Abhängigkeit von dem eingestellten Lebensmittel,
- Vergleichen von Werten der Analyseinformation und/oder des Analyseergebnisses mit der Vergleichsvorgabe, um einen für das Lebensmittel spezifischen zukünftigen bestimmten Zustand zu bestimmen
und/oder dass eine Auswahl der Vergleichsvorgabe dadurch erfolgt, dass die Vergleichsvorgabe in Abhängigkeit von einem eingestellten Lebensmittel aus einer Datenbank ausgelesen wird, wobei die Datenbank vorzugsweise lokal und/oder durch einen zur Küchenmaschine (10) entfernten Rechner cloudbasiert über ein Netzwerk und/oder durch eine insbesondere mobile Datenspeichereinheit bereitgestellt wird.

9. Verfahren (100) nach einem der vorhergehenden Ansprüche,
**dadurch gekennzeichnet,**
**dass** in dem Zubereitungsbetrieb die Bearbeitungsvorrichtung (50), welche vorzugsweise ein Rührwerk (51) umfasst, zur zumindest teilweise automatischen Zubereitung von unterschiedlichen Lebensmitteln, insbesondere Schlagsahne und/oder Nudeln und/oder Reis, angesteuert wird, wobei für jedes dieser Lebensmittel mindestens eine lebensmittelspezifische Vergleichsvorgabe vorgesehen und/oder vorgespeichert ist
und/oder dass eine Vergleichsvorgabe eine Information über eine Erfassungsgrößenauswahl umfasst, wobei die Vergleichsvorgabe in Abhängigkeit von dem eingestellten Lebensmittel ausgewählt wird, und bei der Erfassung (105) die Erfassungsgrößen (102) erfasst werden, welche durch die Erfassungsgrößenauswahl der ausgewählten Vergleichsvorgabe vorgegeben sind, sodass bei Auswahl eines ersten zuzubereitenden Lebensmittels mindestens eine andere Erfassungsgröße (102) erfasst wird, als bei Auswahl eines zweiten zuzubereitenden Lebensmittels.

10. Küchenmaschine (10) mit mindestens einer Bearbeitungsvorrichtung (50) und einer Überwachungsvorrichtung (200), wobei
in einem Zubereitungsbetrieb die Bearbeitungsvorrichtung (50) zur zumindest teilweise automatischen Zubereitung von Lebensmitteln ansteuerbar ist, und
die Überwachungsvorrichtung (200) zumindest zwei Sensoren (52) aufweist, und
durch einen ersten Sensor (52.1) mindestens ein erster Erfassungswert (106.1) durch eine erste Erfassung (105.1) von einer ersten Erfassungsgröße (102.1) der Küchenmaschine (10) ermittelbar ist, und
durch einen zweiten Sensor (52.2) mindestens ein zweiter Erfassungswert (106.2) durch eine zweite Erfassung (105.2) von einer zweiten Erfassungsgröße (102.2) der Küchenmaschine (10) ermittelbar ist, wobei sich die zweite Erfassungsgröße (102.2) von der ersten Erfassungsgröße (102.1) unterscheidet,
**dadurch gekennzeichnet,**
**dass** die Überwachungsvorrichtung (200) eine Verarbeitungsvorrichtung (210) umfasst, durch welche zumindest eine Analyseinformation in Abhängigkeit von dem ersten Erfassungswert (106.1) und/oder dem zweiten Erfassungswert (106.2) bestimmbar ist, und
eine zeitabhängige Analyse (140) der Analyseinformation zur Bestimmung eines für einen Zustand der Zubereitung spezifischen Analyseergebnisses durchführbar ist, wobei in Abhängigkeit von dem Analyseergebnis mindestens ein Steuerungssignal (161) zur Beeinflussung des Zubereitungsbetriebs ausgebbar ist, wobei die Küchenmaschine (10) dazu ausgeführt ist, ein Verfahren (100) nach einem der vorhergehenden Ansprüche durchzuführen.

11. Küchenmaschine (10) nach einem der vorhergehenden Ansprüche,
**dadurch gekennzeichnet,**
**dass** die Bearbeitungsvorrichtung (50) zumindest einen Antrieb (30) und ein durch den Antrieb (30) betreibbares Bearbeitungswerkzeug (51), insbesondere ein Rührwerk (51) der Küchenmaschine (10), umfasst, und insbesondere die Überwachungsvorrichtung (200) elektrisch mit dem Antrieb (30) verbunden ist, sodass eine Erfassung (105) mindestens einer der Erfassungsgrößen (102) durchführbar ist
und/oder dass der erste Sensor (52.1) und/oder der zweite Sensor (52.2) jeweils die Erfassung am Lebensmittel durchführen, und insbesondere im Bereich und/oder zumindest teilweise innerhalb eines Rührgefäßes (24) der Küchenmaschine (10) angeordnet sind.

12. Küchenmaschine (10) nach einem der vorhergehenden Ansprüche,
**dadurch gekennzeichnet,**
**dass** die Küchenmaschine (10) ein Rührgefäß (24) zur Aufnahme des Lebensmittels aufweist, wobei das Rührgefäß (24) zur Erhaltung der Temperatur des Lebensmittels als Thermobehälter ausgeführt ist, vorzugsweise doppelwandig
und/oder dass der Sensor (52) in einem Rührgefäß (24) der Küchenmaschine (10) integriert ist, und vorzugsweise eine Erfassung von Erfassungsgrößen (102) innerhalb und/oder außerhalb des Rührgefäßes (24) durchführt, wobei das Rührgefäß (24) bevorzugt lösbar in eine Rührgefäß-Aufnahme (22) der Küchenmaschine (10) einsetzbar ist
und/oder dass der Sensor (52) derart nachrüstbar ausgeführt ist, dass der Sensor (52) in die Küchenmaschine (10) und/oder einem Rührgefäß (24) der Küchenmaschine (10) und/oder einem Deckel (21) des Rührgefäßes (24) lösbar einsetzbar, vorzugsweise einsteckbar, ist.

13. Küchenmaschine (10) nach einem der vorhergehenden Ansprüche,
**dadurch gekennzeichnet,**
**dass** eine Rührgefäß-Aufnahme (22) der Küchenmaschine (10) und/oder ein in die Rührgefäß-Aufnahme (22) einsetzbares Rührgefäß (24) der Küchenmaschine (10) und/oder ein auf das Rührgefäß (24) aufsetzbarer Deckel (21) des Rührgefäßes (24) zumindest einen elektrischen Kontakt aufweist, um eine elektrische Verbindung zu einem elektrischen Stromkreis der Küchenmaschine (10) im eingesetzten und/oder aufgesetzten Zustand herzustellen, vorzugsweise zur Energieversorgung des Sensors (52) und/oder zur Datenübertragung, wobei bevorzugt der elektrische Kontakt elektrisch mit dem Sensor (52), insbesondere sowohl im eingesetzten und/oder aufgesetzten als auch außerhalb des eingesetzten und/oder aufgesetzten Zustands, verbunden ist.

14. Computerprogrammprodukt zum Betreiben einer Küchenmaschine (10), insbesondere nach einem der vorhergehenden Ansprüche,
**dadurch gekennzeichnet,**
**dass** das Computerprogrammprodukt dazu ausgeführt ist, ein Verfahren (100) nach einem der vorhergehenden Ansprüche durchzuführen.

## Claims

1. Method (100) for operating a food processor (10), wherein in a preparation mode at least one processing device (50) of the food processor (10) is controlled for at least partially automatic preparation of food, and wherein
a monitoring device (200) carries out a determination of detection values (106) by detecting (105) at least two detection variables (102) specific to a state of preparation on the food processor (10),
**characterized by the following steps:**
a) determining at least a first detection value (106.1) by a first detection (105.1) of a first detection variable (102.1),
b) determining at least a second detection value (106.2) by a second detection (105.2) of a second detection variable (102.2), wherein the second detection variable (102.2) is different from the first detection variable (102.1),
c) determining at least one analysis information as a function of the first detection value (106.1) and/or the second detection value (106.2),
d) performing a time-dependent analysis (140) of the analysis information to determine an analysis result specific to the state of the preparation,
e) outputting at least one control signal (161) for influencing the preparation operation as a function of the analysis result, so that the state of the preparation is taken into account in the preparation, wherein
the time-dependent analysis (140) and/or the determination of the analysis result, is performed in an adaptive manner such that the analysis result and/or a quality result of the preparation is used for a future determination of the analysis result of a future preparation.

2. Method (100) according to claim 1,
**characterized in that**
first and/or second and/or all of the determined detection values (106), in particular in the time-dependent analysis (140), are at least partially compared and/or combined with one another
and/or **in that** the first and/or second detection variable (102) in each case comprise physically measurable variables on the kitchen machine (10), which variables in each case influence a property of the food which can be changed by the preparation in a different manner and/or are influenced by the property, so that they are specific to a state of the preparation, preferably the first detection variable (102.1) and the second detection variable (102.2) in each case influencing this changeable property of the food in a different manner and/or being influenced by the property in a different manner.

3. Method (100) according to any one of the preceding claims,
**characterized in that**
first detection values (106.1) are determined periodically and/or repeatedly in the preparation mode, and preferably second detection values (106.2) and/or further detection values (106) are determined periodically and/or repeatedly in parallel therewith in the preparation mode, the analysis information being determined from a time profile (107) of the respective periodically and/or repeatedly determined detection values (106)
and/or **in that** the second detection value (106.2) is determined outside the preparation operation, preferably before the start of the preparation, in order, in particular, to influence the subsequent execution and/or a subsequent evaluation of the time-dependent analysis for determining the analysis result.

4. Method (100) according to any one of the preceding claims,
**characterized in that**
a further analysis of the analysis information is carried out subsequently and/or simultaneously to the time-dependent analysis (140), preferably only after a specific event has occurred, in particular in the preparation mode and/or outside the preparation mode, preferably after the preparation mode has ended, in order to determine the analysis result, the further analysis differing from the time-dependent analysis (140)
and/or that the state of preparation is a future optimal completion time of the prepared food at the time of preparation, wherein the control signal (161) is output in time such that a deactivation of the preparation operation is effected at the completion time, wherein preferably the time duration until the completion time is reached is determined by a calculation and/or prediction by the time-dependent analysis (140).

5. Method (100) according to any one of the preceding claims,
**characterized in that**
a first and a second control signal (161.1, 161.2) are output, wherein
- the first control signal (161.1) is output when a first analysis result is determined, so that the preparation is influenced in a first way, in particular by reducing a rotational speed of an agitator (51) of the food processor (10) in a time-critical region of the time-dependent analysis (140),
- the second control signal (161.2) is output when a second analysis result is determined, so that the preparation is influenced in a second manner which is different from the first manner, in particular by a termination of the preparation operation.

6. Method (100) according to any one of the preceding claims,
**characterized in that**
the second detection variable (102.2) is an environmental parameter outside the kitchen machine (10), in particular
- a spatial and/or geographical and/or local position of the kitchen machine (10), in particular in the form of a GPS coordinate of the kitchen machine (10),
- information about the food and/or the preparation of the food, which is stored outside the food processor (10), in particular in a database, and is preferably retrieved via a network and/or cloud-based,
- a product information of the food, in particular about manufacturer-related properties and/or about the ingredients and/or about the best-before date,
- an air pressure outside the food processor (10),
- a humidity outside the food processor (10),
- a temperature outside the food processor (10),
- a time and/or a time of day and/or a date,
wherein preferably the first detection variable (102.1) is a parameter of the preparation environment within the food processor (10).

7. Method (100) according to any one of the preceding claims,
**characterized in that**
the time-dependent analysis (140) and/or a further analysis or evaluation is carried out in an adaptive manner in such a way that the analysis result and/or a quality result of the preparation is used for a future determination of the analysis result of a future preparation and/or **in that** the time-dependent analysis (140) and/or the determination of the analysis result takes place as a function of a parameterization, the parameterization preferably taking place before the activation of the preparation mode on the basis of a user-dependent adaptation, in particular by means of information from a database
and/or **in that** in the time-dependent analysis (140) at least one comparison specification is evaluated as a function of a prepared foodstuff, wherein, in particular for the calculation and/or prediction of a future specific state, a comparison of the analysis information with the comparison specification takes place, wherein preferably at least one temporal analysis pattern of the analysis information is compared with at least one temporal pattern (152) of the comparison specification.

8. Method (100) according to any one of the preceding claims,
**characterized in that**
the following steps are provided:
- setting and/or selecting a food to be prepared by an operator input on the food processor (10),
- selecting a comparison preset depending on the set food,
- comparing values of the analysis information and/or the analysis result with the comparison specification to determine a future certain condition specific to the food product
and/or **in that** the comparison specification is selected by the comparison specification being read out from a database as a function of a set foodstuff, the database preferably being provided locally and/or by a computer remote from the kitchen machine (10) in a cloud-based manner via a network and/or by a data storage unit, in particular a mobile data storage unit.

9. Method (100) according to any one of the preceding claims,
**characterized in that**
in the preparation mode, the processing device (50), which preferably comprises an agitator (51), is activated for the at least partially automatic preparation of different foodstuffs, in particular whipped cream and/or noodles and/or rice, at least one foodstuff-specific comparison specification being provided and/or prestored for each of these foodstuffs
and/or **in that** a comparison specification comprises information about a detection variable selection, the comparison specification being selected as a function of the set foodstuff, and the detection (105) detects the detection quantities (102) which are specified by the detection variable selection of the selected comparison specification, so that at least one other detection variable (102) is detected when a first foodstuff to be prepared is selected than when a second foodstuff to be prepared is selected.

10. A food processor (10) comprising at least one processing device (50) and a monitoring device (200), wherein
in a preparation mode, the processing device (50) is controllable for at least partially automatic preparation of food, and
the monitoring device (200) comprises at least two sensors (52), and
by a first sensor (52.1) at least a first detection value (106.1) can be determined by a first detection (105.1) of a first detection variable (102.1) of the kitchen machine (10), and
at least a second detection value (106.2) can be determined by a second sensor (52.2) by means of a second detection (105.2) of a second detection variable (102.2) of the kitchen machine (10), the second detection variable (102.2) differing from the first detection variable (102.1),
**characterized in that**
the monitoring device (200) comprises a processing unit (210) by means of which at least one analysis information can be determined as a function of the first detection value (106.1) and/or the second detection value (106.2), and
a time-dependent analysis (140) of the analysis information can be carried out to determine an analysis result specific to a state of the preparation, wherein at least one control signal (161) for influencing the preparation operation can be output as a function of the analysis result, wherein the kitchen machine (10) is designed to carry out a method (100) according to one of the preceding claims.

11. Food processor (10) according to any one of the preceding claims,
**characterized in that**
the processing device (50) comprises at least one drive (30) and a processing tool (51) which can be operated by the drive (30), in particular an agitator (51) of the kitchen machine (10), and in particular the monitoring device (200) is electrically connected to the drive (30), so that a detection (105) of at least one of the detection variables (102) can be performed
and/or **in that** the first sensor (52.1) and/or the second sensor (52.2) each carry out the detection on the foodstuff, and in particular are arranged in the region of and/or at least partially within a stirring vessel (24) of the food processor (10).

12. Food processor (10) according to any one of the preceding claims,
**characterized in that**
the food processor (10) has a stirring vessel (24) for receiving the food, the stirring vessel (24) being designed as a thermal vessel, preferably double-walled, in order to maintain the temperature of the food
and/or **in that** the sensor (52) is integrated in a stirring vessel (24) of the kitchen machine (10) and preferably carries out a detection of detection variables (102) inside and/or outside the stirring vessel (24), wherein the stirring vessel (24) can preferably be inserted detachably into a stirring vessel receptacle (22) of the kitchen machine (10)
and/or **in that** the sensor (52) is designed to be retrofittable in such a way that the sensor (52) can be detachably inserted, preferably plugged, into the food processor (10) and/or a stirring vessel (24) of the food processor (10) and/or a lid (21) of the stirring vessel (24).

13. Food processor (10) according to any one of the preceding claims,
**characterized in that**
a stirring vessel receptacle (22) of the kitchen machine (10) and/or a stirring vessel (24) of the kitchen machine (10) which can be inserted into the stirring vessel receptacle (22) and/or a lid (21) of the stirring vessel (24) which can be placed on the stirring vessel (24) has at least one electrical contact, in order to establish an electrical connection to an electrical circuit of the kitchen machine (10) in the inserted and/or mounted state, preferably for supplying power to the sensor (52) and/or for transmitting data, the electrical contact preferably being electrically connected to the sensor (52), in particular both in the inserted and/or mounted state and outside the inserted and/or mounted state.

14. A computer program product for operating a food processor (10), in particular according to any one of the preceding claims,
**characterized in that**
the computer program product is adapted to perform a method (100) according to any one of the preceding claims.

## Revendications

1. Procédé (100) pour faire fonctionner un robot ménager (10), dans lequel, dans un mode de préparation, au moins un dispositif de traitement (50) du robot ménager (10) est commandé pour la préparation au moins partiellement automatique d'aliments, et dans lequel
un dispositif de surveillance (200) effectue une détermination de valeurs de détection (106) par détection (105) d'au moins deux grandeurs de détection (102) spécifiques à un état de la préparation sur le robot ménager (10),
**caractérisé par les étapes suivantes :**
a) La détermination d'au moins une première valeur de détection (106.1) par une première détection (105.1) d'une première grandeur de détection (102.1),
b) La détermination d'au moins une deuxième valeur de détection (106.2) par une deuxième détection (105.2) d'une deuxième grandeur de détection (102.2), la deuxième grandeur de détection (102.2) se distinguant de la première grandeur de détection (102.1),
c) La détermination d'au moins une information d'analyse en fonction de la première valeur de détection (106.1) et/ou de la deuxième valeur de détection (106.2),
d) Effectuer une analyse en fonction du temps Analyse (140) des informations d'analyse pour déterminer un résultat d'analyse spécifique à l'état de la préparation,
e) L'émission d'au moins un signal de commande (161) pour influencer le mode de préparation en fonction du résultat d'analyse, de sorte que l'état de la préparation est pris en compte lors de la préparation, où
l'analyse en fonction du temps (140) et/ou la détermination du résultat d'analyse, est effectuée de manière à pouvoir apprendre de telle sorte que le résultat d'analyse et/ou un résultat de qualité de la préparation soit utilisé pour une détermination future du résultat d'analyse d'une préparation future.

2. Procédé (100) selon la revendication 1,
**caractérisé en ce que**
la première et/ou la deuxième et/ou toutes les valeurs de détection (106) déterminées, en particulier lors de l'analyse en fonction du temps (140), sont au moins partiellement comparées et/ou combinées entre elles
et/ou **en ce que** la première et/ou la deuxième grandeur de détection (102) comprennent respectivement des grandeurs physiquement mesurables sur le robot ménager (10), qui influencent respectivement de manière différente une propriété de l'aliment modifiable par la préparation et/ou sont influencées par la propriété, de sorte qu'elles sont spécifiques à un état de la préparation, la première grandeur de détection (102.1) et la deuxième grandeur de détection (102.2) influençant respectivement de manière différente cette propriété modifiable de l'aliment et/ou étant influencées de manière différente par la propriété.

3. Procédé (100) selon l'une quelconque des revendications précédentes,
**caractérisé en ce que**
des premières valeurs de détection (106.1) sont déterminées périodiquement et/ou de manière répétée en mode de préparation, et de préférence parallèlement à cela, des deuxièmes valeurs de détection (106.2) et/ou d'autres valeurs de détection (106) sont déterminées périodiquement et/ou de manière répétée en mode de préparation, l'information d'analyse étant déterminée à partir d'une courbe temporelle (107) des valeurs de détection (106) respectives déterminées périodiquement et/ou de manière répétée
et/ou **en ce que** la deuxième valeur de détection (106.2) est déterminée en dehors de l'opération de préparation, de préférence avant le début de la préparation, afin d'influencer notamment l'exécution qui suit et/ou une évaluation qui suit de l'analyse en fonction du temps pour déterminer le résultat d'analyse.

4. Procédé (100) selon l'une quelconque des revendications précédentes,
**caractérisé en ce qu'**
une autre analyse de l'information d'analyse est encore effectuée à la suite et/ou simultanément à l'analyse en fonction du temps (140), de préférence seulement après l'apparition d'un événement déterminé, en particulier dans le mode de préparation et/ou en dehors du mode de préparation, de préférence après la fin du mode de préparation, afin de déterminer le résultat d'analyse, l'autre analyse se distinguant de l'analyse en fonction du temps (140)
et/ou **en ce que** l'état de la préparation est un futur moment de finition optimal de l'aliment préparé lors de la préparation, le signal de commande (161) étant émis dans le temps de telle sorte qu'une désactivation de l'opération de préparation est provoquée au moment de la finition, la durée jusqu'à ce que le moment de la finition soit atteint étant de préférence déterminée par un calcul et/ou une prévision par l'analyse (140) dépendant du temps.

5. Procédé (100) selon l'une quelconque des revendications précédentes,
**caractérisé en ce qu'**
un premier et un deuxième signal de commande (161.1, 161.2) sont émis, où
- le premier signal de commande (161.1) est émis lorsqu'un premier résultat d'analyse est déterminé, de sorte que la préparation est influencée d'une première manière, notamment par la réduction d'une vitesse de rotation d'un agitateur (51) du robot ménager (10) dans une zone critique en termes de temps de l'analyse dépendant du temps (140),
- le deuxième signal de commande (161.2) est émis lorsqu'un deuxième résultat d'analyse est déterminé, de sorte que la préparation est influencée d'une deuxième manière qui est différente de la première manière, en particulier par un arrêt de l'opération de préparation.

6. Procédé (100) selon l'une quelconque des revendications précédentes,
**caractérisé en ce que**
la deuxième grandeur de détection (102.2) est un paramètre d'environnement à l'extérieur du robot ménager (10), en particulier
- une position spatiale et/ou géographique et/ou locale du robot ménager (10), en particulier sous la forme d'une coordonnée GPS du robot ménager (10),
- une information sur l'aliment et/ou la préparation de l'aliment, qui est stockée à l'extérieur du robot ménager (10), en particulier dans une base de données, et qui est de préférence appelée par l'intermédiaire d'un réseau et/ou sur le nuage,
- une information sur le produit de l'aliment, notamment sur les propriétés liées au fabricant et/ou sur les ingrédients et/ou sur la date limite de consommation,
- une pression d'air à l'extérieur du robot ménager (10),
- une humidité de l'air à l'extérieur du robot ménager (10),
- une température extérieure au robot ménager (10),
- une heure et/ou un moment de la journée et/ou une date,
de préférence, la première grandeur de détection (102.1) étant un paramètre de l'environnement de préparation à l'intérieur du robot ménager (10).

7. Procédé (100) selon l'une quelconque des revendications précédentes,
**caractérisé en ce que**
l'analyse en fonction du temps (140) et/ou une autre analyse ou évaluation est effectuée avec une capacité d'apprentissage telle que le résultat d'analyse et/ou un résultat de qualité de la préparation est utilisé pour une détermination future du résultat d'analyse d'une préparation future
et/ou **en ce que** l'analyse en fonction du temps (140) et/ou la détermination du résultat d'analyse s'effectue en fonction d'un paramétrage, le paramétrage s'effectuant de préférence avant l'activation du mode de préparation à l'aide d'une adaptation dépendant de l'utilisateur, notamment par des informations provenant d'une base de données
et/ou **en ce que**, lors de l'analyse en fonction du temps (140), au moins une consigne de comparaison est évaluée en fonction d'un aliment préparé, une comparaison de l'information d'analyse avec la consigne de comparaison étant effectuée, en particulier pour le calcul et/ou la prévision d'un état futur déterminé, au moins une courbe d'analyse temporelle de l'information d'analyse étant de préférence comparée à au moins un modèle de courbe temporelle (152) de la consigne de comparaison.

8. Procédé (100) selon l'une quelconque des revendications précédentes,
**caractérisé en ce que**
les étapes suivantes sont prévues :
- Réglage et/ou sélection d'un aliment à préparer par une entrée de l'opérateur sur le robot ménager (10),
- Sélection d'une consigne de comparaison en fonction de l'aliment réglé,
- Comparer les valeurs des informations d'analyse et/ou du résultat d'analyse avec la consigne de comparaison afin de déterminer un état futur déterminé spécifique à l'aliment
et/ou **en ce qu'**une sélection de la consigne de comparaison s'effectue **en ce que** la consigne de comparaison est lue dans une base de données en fonction d'un aliment réglé, la base de données étant mise à disposition de préférence localement et/ou par un ordinateur éloigné du robot ménager (10) sur la base du cloud via un réseau et/ou par une unité de stockage de données en particulier mobile.

9. Procédé (100) selon l'une quelconque des revendications précédentes,
**caractérisé en ce que**
dans le mode de préparation, le dispositif de traitement (50), qui comprend de préférence un agitateur (51), est commandé pour la préparation au moins partiellement automatique de différents aliments, en particulier de crème fouettée et/ou de pâtes et/ou de riz, au moins une consigne de comparaison spécifique à l'aliment étant prévue et/ou préenregistrée pour chacun de ces aliments
et/ou **en ce qu'**une consigne de comparaison comprend une information sur une sélection de grandeurs de saisie, la consigne de comparaison étant sélectionnée en fonction de l'aliment réglé, et lors de la saisie (105), les grandeurs de saisie (102) sont saisies, lesquelles sont prédéfinies par la sélection de grandeurs de saisie de la consigne de comparaison sélectionnée, de sorte que lors de la sélection d'un premier aliment à préparer, au moins une autre grandeur de saisie (102) est saisie que lors de la sélection d'un deuxième aliment à préparer.

10. Robot ménager (10) comprenant au moins un dispositif de traitement (50) et un dispositif de surveillance (200), dans lequel
dans un mode de préparation, le dispositif de traitement (50) peut être commandé pour la préparation au moins partiellement automatique d'aliments, et
le dispositif de surveillance (200) comprend au moins deux capteurs (52), et
au moins une première valeur de détection (106.1) peut être déterminée par un premier capteur (52.1) par une première détection (105.1) d'une première grandeur de détection (102.1) du robot ménager (10), et
au moins une deuxième valeur de détection (106.2) peut être déterminée par un deuxième capteur (52.2) par une deuxième détection (105.2) d'une deuxième grandeur de détection (102.2) du robot ménager (10), la deuxième grandeur de détection (102.2) se distinguant de la première grandeur de détection (102.1),
**caractérisé en ce que**
le dispositif de surveillance (200) comprend un appareil de traitement (210) par lequel au moins une information d'analyse peut être déterminée en fonction de la première valeur de détection (106.1) et/ou de la deuxième valeur de détection (106.2), et
une analyse en fonction du temps Analyse (140) de l'information d'analyse pour la détermination d'un résultat d'analyse spécifique à un état de la préparation peut être effectuée, où
en fonction du résultat d'analyse, au moins un signal de commande (161) peut être émis pour influencer le mode de préparation, le robot ménager (10) étant conçu pour exécuter un procédé (100) selon l'une des revendications précédentes.

11. Robot ménager (10) selon l'une quelconque des revendications précédentes,
**caractérisé en ce que**
le dispositif de traitement (50) comprend au moins un entraînement (30) et un outil de traitement (51) pouvant être actionné par l'entraînement (30), en particulier un agitateur (51) du robot ménager (10), et en particulier le dispositif de surveillance (200) est relié électriquement à l'entraînement (30), de sorte qu'une détection (105) d'au moins une des grandeurs de détection (102) peut être effectuée
et/ou **en ce que** le premier capteur (52.1) et/ou le deuxième capteur (52.2) effectuent chacun la détection sur l'aliment, et sont notamment disposés dans la zone et/ou au moins partiellement à l'intérieur d'un récipient d'agitation (24) du robot ménager (10).

12. Robot ménager (10) selon l'une quelconque des revendications précédentes,
**caractérisé en ce que**
le robot ménager (10) présente un récipient d'agitation (24) pour recevoir l'aliment, le récipient d'agitation (24) étant réalisé sous forme de récipient thermique pour maintenir la température de l'aliment, de préférence à double paroi
et/ou **en ce que** le capteur (52) est intégré dans un récipient d'agitation (24) du robot ménager (10), et effectue de préférence une détection de grandeurs de détection (102) à l'intérieur et/ou à l'extérieur du récipient d'agitation (24), le récipient d'agitation (24) pouvant être inséré de préférence de manière amovible dans un logement de récipient d'agitation (22) du robot ménager (10)
et/ou **en ce que** le capteur (52) est réalisé de manière à pouvoir être installé ultérieurement de telle sorte que le capteur (52) peut être inséré, de préférence enfiché, de manière amovible dans le robot ménager (10) et/ou dans un récipient d'agitation (24) du robot ménager (10) et/ou dans un couvercle (21) du récipient d'agitation (24).

13. Robot ménager (10) selon l'une quelconque des revendications précédentes,
**caractérisé en ce qu'**
un logement de récipient d'agitation (22) du robot ménager (10) et/ou un récipient d'agitation (24) du robot ménager (10) pouvant être inséré dans le logement de récipient d'agitation (22) et/ou un couvercle (21) du récipient d'agitation (24) pouvant être posé sur le récipient d'agitation (24) présente au moins un contact électrique, pour établir une liaison électrique avec un circuit électrique du robot ménager (10) à l'état inséré et/ou posé, de préférence pour l'alimentation en énergie du capteur (52) et/ou pour la transmission de données, le contact électrique étant de préférence relié électriquement au capteur (52), en particulier aussi bien à l'état inséré et/ou posé qu'en dehors de l'état inséré et/ou posé.

14. Produit programme d'ordinateur pour faire fonctionner un robot ménager (10), notamment selon l'une des revendications précédentes,
**caractérisé en ce que**
le produit programme d'ordinateur est réalisé pour mettre en oeuvre un procédé (100) selon l'une des revendications précédentes.
